(19) Europäisches Patentamt / European Patent Office / Office européen des brevets

(11) **EP 3 661 720 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**21.05.2025 Patentblatt 2025/21**

(45) Hinweis auf die Patenterteilung:
**08.09.2021 Patentblatt 2021/36**

(21) Anmeldenummer: **18739510.8**

(22) Anmeldetag: **09.07.2018**

(51) Internationale Patentklassifikation (IPC):
**B29C 45/78** (2006.01)    **B29C 45/73** (2006.01)
**B29C 35/00** (2006.01)

(52) Gemeinsame Patentklassifikation (CPC):
**B29C 45/78; B29C 35/007; B29C 45/73;**
B29C 2945/76949

(86) Internationale Anmeldenummer:
**PCT/EP2018/068465**

(87) Internationale Veröffentlichungsnummer:
**WO 2019/025122 (07.02.2019 Gazette 2019/06)**

(54) **VERFAHREN ZUR VARIOTHERMEN TEMPERIERUNG VON SPRITZGIESSWERKZEUGEN**

METHOD FOR THE VARIOTHERMAL TEMPERATURE CONTROL OF INJECTION MOULDS

PROCÉDÉ DE THERMORÉGULATION VARIOTHERMIQUE D'OUTILS DE MOULAGE PAR INJECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.08.2017 DE 102017117587**

(43) Veröffentlichungstag der Anmeldung:
**10.06.2020 Patentblatt 2020/24**

(73) Patentinhaber: **KraussMaffei Technologies GmbH**
**80997 München (DE)**

(72) Erfinder:
• **SCHNEEBAUER, Martin**
**80807 München (DE)**
• **MOSER, Stefan**
**85399 Hallbergmoos (DE)**

(74) Vertreter: **Wilhelm, Ludwig**
**KraussMaffei Group GmbH**
**Krauss-Maffei-Strasse 2**
**80997 München (DE)**

(56) Entgegenhaltungen:
WO-A1-2011/048376      DE-A1- 102004 052 499
DE-A1- 102006 031 268      DE-A1- 102007 019 389
DE-A1- 102008 045 006

EP 3 661 720 B2

**Beschreibung**

Die Erfindung betrifft ein Verfahren und eine Vorrichtung zur variothermen Temperierung von Spritzgießwerkzeugen.

Aus der DE 10 2007 019 389 B4 ist ein Formwerkzeugtemperiersystem bekannt, welches durch Mischen zweier Wärmemedien innerhalb einer Formwerkzeugtemperiervorrichtung in der Lage ist, in kurzer Zeit Wärmemedien unterschiedlicher Temperaturen für das Spritzgießwerkzeug bereitzustellen.

Aus der EP 2 329 332 B1 ist ein Verfahren und eine Vorrichtung zur variothermen Temperierung von Spritzgießwerkzeugen bekannt, bei dem zwei Temperaturmedien mit unterschiedlichen Temperaturen bereitgehalten werden und abwechselnd durch einen Verbraucher, z. B. ein Formwerkzeug gepumpt werden, wobei das wärmere Temperiermedium und auch das kältere Temperiermedium unmittelbar an oder in dem Verbraucher bereitgehalten werden und dort unmittelbar oder unter Zwischenschaltung eines Rückschlagventils aufeinandertreffen, sodass sie dort direkt oder indirekt in Kontakt miteinander stehen. Die hierfür offenbarte Vorrichtung stellt den zur Durchführung des Verfahrens erforderlichen apparativen Aufbau zur Verfügung.

Aus "Heiß macht schön - Hochwertige Oberflächen durch variotherme Werkzeugtemperierung", Plastverarbeiter Juli 2008, Seiten 36-38 ist es bekannt, dass durch variotherme Werkzeugtemperierung hochwertige Oberflächen an Kunststoffspritzgussteilen erzielbar sind. Hierbei wird die Werkzeugwand vor dem Einspritzvorgang bis über die Glasübergangstemperatur des Kunststoffs erwärmt. Erst nach der Füllung der Kavität setzt die Werkzeugkühlung ein, bis das Formteil die notwendige Entformungstemperatur erreicht hat. Dazu werden Heiz- und Kühlkanäle wechselweise warm und kalt durchströmt.

Aus "Variotherme Temperierung - Methoden und Einsatzmöglichkeiten" von J. Gießauf, ENGEL Austria GmbH, VDI Fachtagung "Spritzgießen 2008 - Innovation und Produktivität" vom 29.-30. Januar 2008 in Baden-Baden, Deutschland ist es bekannt, dass mit einem Haupttemperierkreis eines Formwerkzeuges das Formwerkzeug stetig oder gepulst geheizt wird. Zwischen Kanälen des Hauptkreises und der Oberfläche der Kavität sind weitere Kühlbohrungen vorgesehen, die während der Kühlphase mit kaltem Fluid durchspült werden. Diese Vorgehensweise ist auch umgekehrt durchführbar. Zudem werden verschiedene physikalische Grundprinzipien zur Temperierung von Formwerkzeugen angegeben. Dies sind z. B. die Temperierung mit Wasser, Öl oder Dampf sowie mittels elektrischer Widerstandsheizungen, mittels Induktion, mittels Wärmestrahlung und/oder mittels Infraroheizung im geöffneten Werkzeug.

Die variotherme Prozessführung ist mittlerweile Standard bei der Fertigung komplexer Spritzgießbauteile. Dabei wird die Werkzeugwandtemperatur während des Spritzgießzyklus auf verschiedenen Niveaus bewegt. Grundsätzlich werden durch eine höhere Werkzeugwandtemperatur verbesserte Fließeigenschaften bei der Formfüllung erreicht und dadurch folgende Effekte erzielt:

- verbesserte Abformung von mikrostrukturierten Oberflächen,
- Reduzierung der Sichtbarkeit von Bindenähten,
- verbesserter Glanz,
- Reduzierung von Schlierenbildung bei der Verarbeitung von gefüllten Werkstoffen,
- Unterstützung bzw. Beschleunigung der Aushärtereaktion von reaktiven Kunststoffen,
- Reduzierung von Einspritzdruck und Schließkraft,
- verbesserte Maßhaltigkeit und Toleranz der erzeugten Formteile.

Auf der anderen Seite führen höhere Wandtemperaturen zu einer Verlängerung der notwendigen Kühlzeit und verschlechtern damit die Wirtschaftlichkeit des Verfahrens aufgrund geringerer Ausbringung. Durch den Einsatz der variothermen Temperierung kann diesem Nachteil entgegengewirkt werden, indem ein weiterer Temperierkreislauf auf einem tieferen Temperaturniveau dazu genutzt wird, die Kavität und/oder Teilbereiche davon aktiv zu kühlen und somit die Wärmeabfuhr aus dem Formteil zu beschleunigen. Daneben kann es erforderlich sein, das Bauteil für eine bessere Entformbarkeit auf ein tieferes Temperaturniveau zu kühlen. Um die Energieeffizienz und die Dynamik des Systems zu verbessern, werden variotherm temperierte Formeinsätze idealerweise mit einem konturfolgenden, kavitätsnahen Temperiersystem ausgelegt, um die variotherme Masse so weit wie möglich zu reduzieren. Es ist somit wünschenswert, beispielsweise Heizkanäle oder Kühlkanäle sehr nahe an der Kavität in der Wand anzuordnen, so dass aufgrund geringer Werkzeugwandstärken eine hohe Dynamik erreichbar ist.

Auf dem Markt sind mittlerweile unterschiedliche Technologien für die variotherme Temperierung von Formeinsätzen verfügbar. Dazu gehören werkzeugexterne oder -interne elektrische und/oder induktive Heizsysteme, Systeme mit Wasserkühlung, Zwei- und/oder. Dreikreisfluidsysteme auf Öl- oder Wasserbasis, $CO_2$-Temperier-systeme, externe Laser und Systeme mit Dampfheizung.

Für eine weitere Verbesserung der Effizienz wird bei Wasser-Wasser- und auch bei Öl-Öl-Systemen ein Zwischenspeicher eingesetzt, um das Temperiermedium in den geschlossenen Heiz- und Kühlkreisläufen hydraulisch zu trennen und eine Vermischung von heißem und kaltem Medium nach Möglichkeit zu vermeiden. Allen Verfahren ist gemeinsam, dass dem Werkzeug zyklisch Energie zugeführt und anschließend wieder aus dem Werkzeug abgeführt werden muss.

Die Dynamik eines variotherm zu betreibenden Werkzeugs ergibt sich im Wesentlichen aus der Vorlauftemperatur, der Durchflussmenge pro Zeiteinheit, dem Druck des Mediums, der Anordnung der Temperierkanäle und der Heizleistung der Temperiergeräte sowie der variotherm zu temperierenden Masse des Werkzeuges. Keines der genannten Wasser-Wasser-Variotherm-Systeme bietet die Möglichkeit die Werkzeugwandtemperatur zu regeln. Es wird lediglich zur bestimmten, vorher einmal festgelegten Zeitpunkt ein heißes oder kaltes Medium in den Werkzeugkreislauf geschickt. Die Veränderung der Werkzeugwandtemperatur wird also lediglich gesteuert. Sinnvollerweise besitzt jedes Formwerkzeug für den variothermen Betrieb jedoch einen Temperaturfühler an der Werkzeugwand. An diesem Ort ist die Führung der Temperatur aus prozesstechnischer Sicht entscheidend.

Mit derartigen bekannten Systemen können Umwelteinflüsse, wie z. B. die Hallentemperatur, die Vorlauftemperatur des Hallenwassers und der Verschleiß des Werkzeuges oder des Temperiergerätes, z. B. Verkalkung, Korrosion und/oder sich ändernden Pumpenleistung etc. Einfluss auf die Heiz- und Kühlleistung der variothermen Anlage nehmen. Im bekannten, konventionellen gesteuerten Betrieb gemäß dem Stand der Technik wird dies lediglich durch die Überwachung von Werkzeugwandtemperaturverläufen erkennbar. Die Anlage selbst kann jedoch derartige Langzeitveränderungen nicht ausgleichen, was zu Schwankungen im Temperaturverlauf am Werkzeug führt. Dies kann insbesondere dann von Nachteil sein, wenn komplexe Verarbeitungsprozesse vorliegen und hohe Genauigkeiten des Systems gefordert sind.

Es ist weiterhin bekannt, eine sogenannte Einspritzfreigabe zu geben, wenn ein einstellbares Temperaturniveau an einem Werkzeugwandfühler erreicht wird. In der Praxis kommt es allerdings zu Überschwingern der Temperatur, die insbesondere bei Artikeln mit langen Einspritzzeiten merklich ins Gewicht fallen und die Qualität des Formteils negativ beeinflussen. Je größer der Überschwinger der Temperatur über ein erforderliches Niveau wird, desto langsamer wird dem Bauteil Energie entzogen, was zu einer Verlängerung der Zykluszeit führt. Ebenso wird der Energieverbrauch höher, da wieder von einem höheren Temperaturniveau aus heruntergekühlt werden muss.

Bei bekannten Steuerungen ist eine erhebliche Erfahrung und Verantwortung des Bedieners erforderlich, in Abhängigkeit der Komplexität und der Qualitätsanforderungen an das Formteil, die entsprechenden Auslöseschwellwerte manuell einzustellen, um entsprechende Kommunikationssignale abzustimmen. Nachteilig ist hier insbesondere, dass durch die Zunahme an Komplexität der Steuerungen auch ein zeitlicher Mehraufwand bei der Einrichtung des Prozesses in Kauf zu nehmen ist.

Aus der DE 10 2006 031 268 A1 ist eine Vorrichtung und ein Verfahren zur benutzerspezifischen Überwachung und Regelung einer Produktion, nämlich einer Spritzgießproduktion bekannt. Das Verfahren lehrt, innerhalb eines Extrusions- oder Spritzgießverfahrens in einem Eingabeschritt einen SOLL-Wert wenigstens einer Verarbeitungssteuerungsgröße vorzugeben. In einem Prozessierungsschritt wird aus der wenigstens einen vorbestimmten Verarbeitungssteuerungsgröße eine vorbestimmte Verarbeitungsüberwachungsgröße ermittelt. Weiterhin wird in wenigstens einem Ausgabeschritt ein Wert wenigstens einer Verarbeitungsüberwachungsgröße, insbesondere der IST-, SOLL-, Durchschnittswert, des seit dem Beginn des Verfahrens integrierten Wertes und/oder dessen Historie und/oder dessen Tendenz ausgegeben.

Aus der DE 10 2004 052 499 A1 ist ein Spritzgießwerkzeug und ein Elektronikmodul bekannt. Das Spritzgießwerkzeug weist Mittel zur Speicherung von Parametern auf, Mittel zur Auswertung der Parameter und Mittel zur Generierung einer Nachricht im Abhängigkeit von der Auswertung der Parameter sowie Mittel zum Senden der Nachricht.

Aus der DE 10 2008 045 006 A1 ist ein Verfahren und eine Vorrichtung zur variothermen Temperierung von Spritzgießwerkzeugen bekannt, wobei in einer Produktionsphase eine Temperierung des Spritzgießwerkzeuges erfolgt. Aus Abweichungen einer IST-Temperatur eines Spritzgießwerkzeuges von einer SOLL-Temperatur des Spritzgießwerkzeuges werden Stellglieder der Vorrichtung, welche einen Durchfluss von warmem Medium und/oder kaltem Medium durch das Spritzgießwerkzeug korrigieren, beeinflusst. Der weitere Spritzgießprozess wird mit korrigierten Stellwerten durchgeführt.

Aufgabe der Erfindung ist es, ein Verfahren zur variothermen Temperierung von Spritzgießwerkzeugen anzugeben, welches eine deutlich verbesserte Prozessführung bei deutlich verbesserten Bauteilqualitäten zulässt, auch wenn Randbedingungen, wie z. B. Schwankungen der Schmelzetemperatur und Umgebungsparameter wie z. B. Hallentemperatur oder dergleichen, schwanken.

Das Verfahren soll in der Lage sein, selbstständig die Temperierung der Spritzgießwerkzeuge an sich im Produktionsverlauf ändernde Parameter anzupassen, um so eine verbesserte Qualitätskonstanz der Formteile sicherzustellen.

Des Weiteren ist es Aufgabe der Erfindung, ein variothermes Temperierverfahren von Spritzgießwerkzeugen anzugeben, welches weitgehend unabhängig von Spezialkenntnissen und/oder Bedienerfahrungen von Bedienpersonal ist. Es soll insbesondere in der Lage sein, ausgehend von einem vorab festgelegten Temperaturverlauf eines Spritzgießwerkzeuges bzw. eines Temperiersystems während des Spritzgießzykluses selbstständig und vollautomatisch einer Idealtemperaturführung während einer Produktionsphase möglichst nahe zu kommen.

Diese Aufgaben werden mit einem Verfahren zur variothermen Temperierung eines Spritzgießwerkzeuges mit den Merkmalen des Anspruchs 1 gelöst. Vorteilhafte Ausführungsformen sind in den vom Anspruch 1 abhängigen Unteransprüchen angegeben.

Das erfindungsgemäße Verfahren zur variothermen Temperierung eines Spritzgießwerkzeuges unter Verwendung einer Temperiervorrichtung weist zumindest die folgenden Schritte auf:

A) In einer Lernphase:

- Ermitteln einer Temperiercharakteristik des zu temperierenden Systems umfassend zumindest das Spritzgießwerkzeug und die Temperiervorrichtung zum Erhalt von systemindividuellen Stellwerten, mit denen Stellglieder der Temperiervorrichtung zur Erreichung eines Soll-Temperaturprofiles angesteuert werden können und

B) In einer Produktionsphase:

- Temperierung des Spritzgießwerkzeuges mit den in der Lernphase ermittelten Stellwerten;
- Ermittlung von Abweichungen eines Ist-Temperaturprofiles des Spritzgießwerkzeuges gegenüber dem Soll-Temperaturprofil während des Produktionszyklus und berechnen korrigierter Stellwerte bzw. Stellzeiten für die Stellglieder aus diesen Abweichungen;
- Durchführen eines darauffolgenden Produktionsprozesses mit den korrigierten Stellwerten,
- wobei zur Ermittlung der Temperiercharakteristik des zu temperierenden Systems mindestens bestehend aus einem Heizgerät, einem Kühlgerät, Stellgliedern und einem Spritzgießwerkzeug eine maximal erreichbare Wandtemperatur ($T_{max}$) einer Kavität des Spritzgießwerkzeuges ermittelt und gespeichert wird und wobei ausgehend von der Temperatur ($T_{max}$) die Kühlung bei abgeschalteter Heizung gestartet wird, wobei eine maximale negative Steigung in Kelvin pro Sekunde am Wendepunkt (W) der Kühlkurve (TK) bestimmt wird (K/scool) und an den Wendepunkt (W) der Kühlkurve (TK) eine Tangente (T) gelegt wird, wobei ein Schnittpunkt der Tangente (T) mit der Abszisse ermittelt wird und eine Verzugszeit ($t_{ucool}$) als zeitlicher Abstand zwischen dem Beginn der Kühlung und dem Schnittpunkt der Tangente (T) mit der Abszisse definiert wird.

Somit wird zunächst in einer Lernphase, in Abhängigkeit der eingesetzten Temperiervorrichtung und des bauteilspezifischen Spritzgießwerkzeuges systemindividuell das zu temperierende System charakterisiert, was insbesondere die Temperierdynamik, also die Temperaturreaktion des Spritzgießwerkzeuges im Falle eines Heizens oder Kühlens desselben mit umfasst. In Kenntnis dieser systemindividuellen Temperiercharakteristik und auch in Kenntnis von bauteilspezifischen Temperieranforderungen, die z. B. aus Erfahrungswerten eines Prozessentwicklers/-designers hergeleitet werden können, wird ein Soll-Temperaturprofil des Spritzgießwerkzeuges angesteuert. Dieses Soll-Temperaturprofil findet seinen Niederschlag in systemindividuellen Stellwerten, die zur Ansteuerung von Stellgliedern der Temperiervorrichtung verwendet werden, um das Soll-Temperaturprofil zu erreichen.

Ausgehend von diesen systemindividuellen Stellwerten wird dann in einer Produktionsphase, in der mit dem Spritzgießwerkzeug Formteile hergestellt werden, die Temperierung des Spritzgießwerkzeuges durchgeführt. Hierbei entstehen üblicherweise Abweichungen eines Ist-Temperaturprofils des Spritzgießwerkzeuges vom Soll-Temperaturprofil des Spritzgießwerkzeuges. Diese Abweichungen werden während der Produktionsphase ab dem ersten Zyklus der Produktionsphase ermittelt. In Kenntnis der Temperiercharakteristik des zu temperierenden Systems, welche in der Lernphase ermittelt wurde, können in guter Näherung korrigierte Stellwerte aus den Abweichungen des Ist-Temperaturprofils des Spritzgießwerkzeuges vom Soll-Temperaturprofil des Spritzgießwerkzeuges berechnet werden. Mit diesen korrigierten Stellwerten wird dann der darauffolgende Produktionsprozess, z. B. der auf den ersten Produktionsprozess folgende zweite Produktionsprozess durchgeführt. Auch während dieses Produktionsprozesses werden wiederum Abweichungen des Ist-Temperaturprofils gegenüber dem Soll-Temperaturprofil ermittelt und erneut korrigierte Stellwerte zur Ansteuerung der Stellglieder der Temperiervorrichtung berechnet. Mit den erneut korrigierten Stellwerten wird in einem darauffolgenden Produktionsprozess die Temperiervorrichtung angesteuert. Dieses Vorgehen wird für die weiteren Produktionsprozesse (Zyklen) beibehalten. Somit erfolgt also während der Produktionsphase iterativ ein stetiger weiterer Anpassungsvorgang der Stellwerte, bis in der Produktionsphase das Ist-Temperaturprofil möglichst genau und möglichst nahe mit dem Soll-Temperaturprofil zusammenfällt. In der Produktionsphase erfolgt somit ein stetiges iteratives Annähern des Ist-Temperaturprofils an das Soll-Temperaturprofil.

Treten nunmehr während der Produktionsphase, die eine Vielzahl von aufeinanderfolgenden Produktionsprozessen (Zyklen) umfasst, Abweichungen von Randbedingungen, die Einfluss auf den Betrieb der Spritzgießmaschine zusammen mit dem Spritzgießwerkzeug haben können, auf, so wird sich dies in einem geänderten Ist-Temperaturprofil niederschlagen. Ein solches, sich auch schleichend änderndes Ist-Temperaturprofil kann dann mit dem erfindungsgemäßen Verfahren wieder an das Soll-Temperaturprofil angenähert werden. Hierdurch werden z. B. qualitätsmindernde Störeinflüsse wie z. B. Temperaturschwankungen in der Schmelze oder Schwankungen in der Umgebungstemperatur oder dergleichen über die Vielzahl der Produktionszyklen (Produktionsprozesse) ausgeglichen und minimiert. Dies hat zur Folge, dass eine erhöhte Bauteilqualität erreichbar ist, ohne dass ein manuelles Eingreifen eines Bedieners erforderlich ist. Die Ermittlung der maximal möglichen Wandtemperatur Tmax stellt einen ersten Sdchritt dar, um die Temperiercharakteristik des zu temperierenden Systems hinsichtlich der maximal erreichbaren Temperatur einzugrenzen. Innerhalb dieses Temperaturfensters zwischen einer weiter unten erläuterten minimalen Wandtemperatur Tmin und der Temperatur Tmax kann somit eine variotherme Temperierung des zu temperierenden Systems, insbesondere des Spritzgießwerkzeuges, erfolgen. Durch die Maßnahmen des letzten Merkmals kann die Temperierdynamik für die Betriebsart "Puls-Kühlen" (Kühldynamik) des zu temperierenden Systems gut ermittelt werden. Dies erlaubt Aussagen über die Kühlcharakteristik des zu temperierenden Systems.

Eine Spritzgießmaschine, die nach dem erfindungsgemäßen Verfahren arbeitet, kann somit selbstständig, also vollautomatisch, eine optimale variotherme Temperierung auch über einen längeren Zeitraum während einer Produktionsphase gewährleisten.

Eine besondere Ausführungsform des erfindungsgemäßen Verfahrens ist dadurch gekennzeichnet, dass

A1) zum Ermitteln einer Temperiercharakteristik des zu temperierenden Systems; ein Berechnen von Ansteuerzeiten für Heiz- und/oder Kühlvorrichtungen der Temperiervorrichtung zur Erreichung eines zeitlichen Soll-Temperaturprofils des Spritzgießwerkzeuges für ein herzustellendes Formteil erfolgt; A2) eine Evaluation des Soll-Temperaturprofils in mindestens einem Evaluierungszyklus und bedarfsweises Korrigieren der Ansteuerungszeiten durchgeführt wird und A3) ein Speichern zumindest der korrigierten Ansteuerzeiten aus Schritt A3) als Stellwerte für das zu temperierende System, insbesondere dessen Stellglieder erfolgt und B1) während eines ersten Produktionszyklus ein Abfahren des Temperaturprofils mit den Stellwerten aus Schritt A3) erfolgt; B2) ein Ermitteln der Ist-Temperaturen und ein Vergleich mit korrespondierenden Soll-Temperaturen des Soll-Temperaturprofiles des Spritzgießwerkzeuges erfolgt; B3) eine Berechnung korrigierter Stellwerte, nämlich Ansteuerzeiten für die Stellglieder des darauffolgenden Produktionszyklus aus Abweichungen ermittelt im Schritt B2) erfolgt und B4) ein Durchführen des darauffolgenden Produktionszyklus mit den korrigierten Ansteuerzeiten aus Schritt B3) erfolgt und B5) die Schritte B2) bis B5) während weiterer Produktionszyklen wiederholt werden.

Durch eine mehrstufige Ermittlung der Ansteuerzeiten, insbesondere der hierzu korrespondierenden Stellwerte, wird bereits in der Lernphase eine ziemlich genaue Angleichung des Ist-Temperaturprofils an das gewünschte Soll-Temperaturprofil erreicht, wobei in der Produktionsphase zudem das bereits oben beschriebene laufende Optimierungsprogramm bevorzugt in jedem Spritzgießzyklus durchgeführt wird, welches dann in der Lage ist, variierende und/oder schwankende Umgebungsbedingungen (Randbedingungen), die gegebenenfalls einen negativen Einfluss auf die Bauteilqualität haben können, mittels einer genau angepassten Werkzeugtemperierung auszugleichen.

Als Heiz- und/oder Kühleinrichtungen der Temperiervorrichtung können vorteilhafterweise zumindest eine oder eine Kombination aus der Gruppe:

- Wasserheiz- und/oder Wasserkühleinrichtung;
- Ölheiz- und/oder Ölkühleinrichtung;
- elektrische Heiz- und/oder elektrische Kühleinrichtung;
- Heiz- und/oder Kühlpatronen;
- Heizeinrichtungen auf Induktionsbasis oder mittels Laser sowie keramische Heizungen;
- Kältemittelkühlvorrichtungen und/oder $CO_2$-Kühlvorrichtungen und/oder eine Kühlung mittels eines Gases, z. B. Luft;
- Heizvorrichtung und/oder Kühlvorrichtung auf der Basis eines Wärmeträgeröles und/oder Heißdampfes

verwendet werden.

Das erfindungsgemäße Verfahren ist unabhängig von der Art der Heiz- und/oder Kühleinrichtungen mit Vorteil einsetzbar. Somit ist auch eine große Variabilität hinsichtlich der Einsetzbarkeit des erfindungsgemäßen Verfahrens in unterschiedlichen Spritzgießwerkzeugtypen oder Spritzgießwerkzeugkonzepten möglich.

Soweit angegeben ist, dass als Stellwerte Ansteuerzeiten für Heiz- und/oder Kühleinrichtungen ermittelt und im weiteren Verlauf verwendet werden, so können selbstverständlich in Abhängigkeit der genutzten Heiz- und/oder Kühleinrichtungen auch andere Parameter als die Ansteuerzeit verwendet werden. So ist es beispielsweise ohne weiteres möglich, bei Verwendung von elektrischen Heiz- und/oder Kühleinrichtungen statt den Ansteuerzeiten beispielsweise die Stromstärken oder andere Parameter, welche die Heizleistung/Kühlleistung der verwendeten Heizeinrichtung/Kühleinrichtung beeinflussen, zu verwenden. So ist es beispielsweise auch machbar, bei Verwendung von Heiz- und/oder Kühleinrichtungen, die ein Heizund/oder Kühlmedium nutzen, anstelle der Ansteuerzeit, mit der üblicherweise die Durchflussdauer des Heiz- und/oder Kühlmediums beeinflusst wird, auch Maßnahmen vorzusehen, mit denen die Durchflussmenge des Mediums beeinflusst wird. Hieraus können gegebenenfalls Stellwerte in Form von Ansteuersignalen für entsprechende Pumpen oder andere den Volumenstrom des Mediums beeinflussende Gerätschaften ergeben.

Es hat sich weiterhin als vorteilhaft herausgestellt, den Schritt A) des erfindungsgemäßen Verfahrens bzw. die Schrittfolge A1) bis A3) während der Lernphase ohne Befüllung des Spritzgießwerkzeuges mit Formmasse durchzuführen. Hierdurch wird erreicht, dass alleine die Temperiercharakteristik des zu temperierenden Systems ermittelbar ist, ohne dass Einflüsse der Schmelze diese Ermittlung beeinträchtigen könnte.

Außerdem ist vorteilhaft, dass eine solche Ermittlung der Temperiercharakteristik in einem z. B. standardisierten Versuchsaufbau durchgeführt werden kann. Eine Montage des zu temperierenden Systems auf einer Spritzgießmaschine ist hierbei nicht erforderlich. Somit kann beispielsweise unter Laborbedingungen die Temperiercharakteristik des zu temperierenden Systems ohne gegebenenfalls nachteilige und schwankende Außenumstände ermittelt werden.

Weiterhin ist es zweckmäßig, in einem derart standardisierten Versuchsaufbau ermittelte Stellwerte für das im Lernprozess behandelte zu temperierende System als temperiersystemspezifische Stellwerte dem zu temperierenden System zuzuordnen und gegebenenfalls geeignet abzuspeichern. Mit derartigen temperiersystemspezifischen Stellwerten kann dann ohne weiteres das zu temperierende System, also zumindest das Spritzgießwerkzeug und die Temperiervorrichtung, in guter Näherung beispielsweise bei einer Erstinbetriebnahme auf einer Spritzgießmaschine betrieben werden und sofort mit dem Produktionsprozess begonnen werden. Während des Produktionsprozesses erfolgt dann - wie vorbeschrieben - eine weitere iterative Annäherung an den vorgegebenen Idealtemperaturverlauf im Spritzgießwerkzeug.

In einer weiteren Ausführungsform des erfindungsgemäßen Verfahrens wird außerdem eine minimal erreichbare Wandtemperatur ($T_{min}$) einer Kavität des Spritzgießwerkzeuges ermittelt und gespeichert.

Diese Maßnahme stellt einen ersten Schritt dar, um die Temperiercharakteristik des zu temperierenden Systems hinsichtlich der minimal erreichbaren Temperaturen einzugrenzen. Innerhalb dieses Tempe- raturfensters zwischen $T_{min}$ und $T_{max}$ kann somit eine variotherme Temperierung des zu temperierenden Systems, insbesondere des Spritzgießwerkzeuges, erfolgen.

Zur Ermittlung der Temperierdynamik wird vorteilhaft weiterhin während des Aufheizvorgangs die maximale Steigung einer Aufheizkurve zwischen $T_{min}$ und $T_{max}$, welche an deren Wendepunkt liegt, ermittelt und die maximale Steigung in der Einheit Kelvin pro Sekunde ($K/s_{heat}$) für die Betriebsart "Puls-Heizen" bestimmt.

Dies kann beispielsweise dadurch geschehen, dass an den Wendepunkt der Aufheizkurve eine Tangente an die Aufheizkurve gelegt wird und ein Schnittpunkt der Tangente mit der Abszisse gebildet wird, wobei als Verzugszeit $tu_{heat}$ der zeitliche Abstand zwischen dem Beginn der Heizung und dem Schnittpunkt der Tangente mit der Abszisse definiert wird. Durch diese Maßnahme und insbesondere in Abhängigkeit der entstehenden Verzugszeit $tu_{heat}$ kann die Temperierdynamik des zu temperierenden Systems, die u. a. einen wesentlichen Punkt der Gesamttemperiercharakteristik darstellt, ermittelt werden.

Weiterhin ist es vorteilhaft eine mittlere Temperatur $T_{Basis}$ zwischen der minimalen Temperatur $T_{min}$ und der maximalen Temperatur $T_{max}$ zu berechnen. Diese kann als Ausgangspunkt für weitere Berechnungen verwendet werden.

Beispielsweise kann aus der Formel mit

$$t_{basisheat} \; = \; (( \, T_{Basis} - T_{min} \, ) \, / \, K/s_{heat} \, ) + \; tu_{heat}$$

die Ansteuerzeit ($t_{basisheat}$) für ein Pulsheizen von der minimalen Temperatur ($T_{min}$) auf die mittlere Temperatur ($T_{Basis}$) errechnet werden.

Mit dieser Berechnung wird somit eine bestimmte Zeitspanne für den Betrieb der Heizeinrichtung errechnet, um von der minimalen Temperatur ($T_{min}$) bis zur mittleren Temperatur ($T_{Basis}$) zu gelangen, wobei die Verzögerungszeit ($tu_{heat}$) bereits eingerechnet ist und somit die ermittelte Ansteuerzeit bereits temperierdynamische Aspekte des zu temperierenden Systems berücksichtigt.

Weiterhin ist es vorteilhaft, dass nach dem Abschalten der Heizung, das heißt nach Ablauf der Zeit ($t_{basisheat}$) eine Zeitspanne gemessen wird, bis keine weitere signifikante Temperaturänderung am Werkzeugwandfühler mehr auftritt, wobei eine Temperatur ($T_{basisheat}$) und eine Nachschwingzeit (Totzeit) ($t_{Basisheatdead}$) gemessen und gespeichert wird.

Hierdurch kann der Effekt des Nachheizens, nachdem die Abschaltung der Heizung bereits erfolgt ist, gut ermittelt werden und Voraussagen getroffen werden, wie lange sich das Werkzeug noch erwärmt, obwohl die Heizung bereits abgeschaltet ist.

Mit einer solchen sich ergebenden Temperatur $T_{Basisheat}$ kann eine Überschwingtemperatur $T_{Basisheaterror}$ berechnet werden aus der Formel

$$T_{Basisheaterror} = T_{Basisheat} - T_{Basis}$$

Das vorbeschriebene Verfahren für den Fall des Heizens kann analog im umgekehrter Richtung für den Fall des Kühlens durchgeführt werden, wobei die Heizung angesteuert wird während die Kühlung abgeschaltet ist, bis die maximale Temperatur ($T_{max}$) am Werkzeugwandfühler erreicht ist, dann die Kühlung bei abgeschalteter Heizung aktiviert wird und aus der Formel

$$t_{basiscool} = (( T_{max} - T_{Basis} ) / K/s_{cool} ) + tu_{cool}$$

die Ansteuerzeit ($t_{basiscool}$) für ein Pulskühlen von der maximalen Temperatur ($T_{max}$) auf die mittlere Temperatur ($T_{Basis}$) berechnet wird. Es kann somit jede beliebige Temperatur zwischen $T_{min}$ und $T_{max}$ angefahren werden.

Hierdurch gelingt es, in analoger Weise eine Ansteuerungszeit für die Kühlvorrichtung zu ermitteln, mit der es möglich ist, das Spritzgießwerkzeug von der maximalen Temperatur $T_{max}$ auf mittlere Temperatur $T_{Basis}$ abzukühlen. Auch ein nachgelagertes Unterschwingen (Nachkühlen) wird in analoger Art und Weise zum Überschwingen im Heizzyklus ermittelt, wobei ausgehend von der maximalen Temperatur ($T_{max}$) aus einem vorherigen Lernschritt die Kühlung angesteuert und nach der Zeit ($t_{basiscool}$) abgeschaltet wird. Im Anschluss daran wird diejenige Zeit gemessen, bis keine signifikante Temperaturänderung mehr am Werkzeugwandfühler in der Kavität messbar ist, wobei die Temperatur ($T_{basiscool}$) und die Nachschwingzeit (Totzeit) ($t_{Basiscooldead}$) gemessen und gespeichert wird und die Abweichung von ($T_{Basis}$) zu ($T_{Basiscool}$) nach der Formel

$$T_{Basiscoolerror} = T_{Basis} - T_{Basiscool}$$

berechnet wird.

Weiterhin ist es vorteilhaft, in einem Prozessablauf für zumindest einen Puls-Heizen- oder zumindest einen Puls-Kühlenschritt Ansteuerzeiten der Heizvorrichtung und/oder der Kühlvorrichtung ausgehend von der aktuellen Temperatur der Kavitätenwand ($T_{actMld}$) zu messen und zu speichern, wobei die Solltemperatur ($T_{Soll}$) aus dem aktuellen Schritt ermittelt wird und wenn die Solltemperatur ($T_{Soll}$) größer ist als die Temperatur ($T_{actMld}$), im ersten Optimierungslauf die Zeit ($t_{Prozess1}$) nach der Formel

$$t_{Prozess1} = (( T_{Soll1} - T_{actMld} ) / K/s_{heat} ) + tu_{heat} + T_{Basisheaterror} / K/s_{heat}$$

berechnet wird.

Durch diese Maßnahme wird nunmehr eine aktuelle, also eine Ist-Temperatur der Kavitätenwand ($T_{actMld}$) gemessen und hierdurch korrigierend auf diese eingewirkt, wenn die Soll-Temperatur ($T_{Soll}$) größer ist als die Ist-Temperatur ($T_{actMld}$).

Für den anders herum gelagerten Fall, nämlich, dass die Soll-Temperatur $T_{Soll}$ kleiner ist als die aktuelle Temperatur $T_{actMld}$ wird die Zeit $t_{Prozess1}$ aus der Formel

$$t_{Prozess1} = (( T_{Soll1} - T_{actMld} ) / K/s_{cool} ) + tu_{cool +} T_{Basiscoolerror} / K/s_{cool}$$

berechnet.

Zur genaueren Bestimmung der Zeitberechnung der Zeit $t_{Prozess1}$ empfiehlt es sich, weitere Prozesse analog durchzuführen und eine Vielzahl von iterativ verbesserten Zeiten $t_{Prozess1}$ zu erhalten. Insbesondere hat sich zur Ermittlung der Zeit $t_{Prozess1}$ für einen Pulsheizprozess oder einen Pulskühlprozess ein mehrfaches Durchführen als vorteilhaft erwiesen.

Eine weitere Ausführungsform des erfindungsgemäßen Verfahrens ist dadurch gekennzeichnet, dass während weiterer Durchläufe die Ansteuerzeiten der Heizvorrichtung und/oder der Kühlvorrichtung um eine Starttemperaturabweichung ($T_{startOffset}$) und/oder eine Endtemperaturabweichung ($T_{endOffset}$) in Bezug auf die Solltemperatur (Referenz) korrigiert werden, wobei nachfolgend aufgelistete Formeln verwendet werden:

$$T_{startOffsetx} = T_{actMldx} - T_{(actMldx) n-1}$$

$$T_{endOffset} = T_{Prozessx} - T_{(Prozessx) n-1}$$

und wobei

(n-1) die entsprechende Temperatur aus dem vorangegangenen Durchlauf ist.

Mit dieser Maßnahme kann eine geänderte Starttemperatur, sei sie höher oder niedriger als eine entsprechende Soll-Startreferenztemperatur, ermittelt werden. Eine derartige Ausgangstemperatur am Anfang des Prozesses oder am Ende des Prozesses hat direkten Einfluss auf die Ansteuerzeiten der Heizvorrichtung und/oder der Kühlvorrichtung für den nächsten, darauffolgenden Produktionsprozess.

Solche hieraus resultierenden Änderungen der Ansteuerzeiten können insbesondere in einer bevorzugten Ausführungsform des Verfahrens ermittelt werden, welches sich dadurch auszeichnet, dass eine zur Starttemperaturabweichung ($T_{startOffset}$) und/oder zur Endtemperaturabweichung ($T_{endOffset}$) korrespondierende Zeit ($t_{startOffset}$) und ($t_{endOffset}$) in Abhängigkeit von der Dynamik des Puls-Heizens ($K/s_{heat}$) oder des Puls-Kühlens ($K/s_{cool}$) berechnet wird, wobei gilt:

Für Puls-Heizen:

$$t_{startOffset} = T_{startOffset} / K/s_{heat}$$

$$t_{endOffset} = T_{endOffset} / K/s_{heat}$$

Für Puls-Kühlen:

$$t_{startOffset} = T_{startOffset} / K/s_{cool}$$

$$t_{endOffset} = T_{endOffset} / K/s_{cool}$$

Somit sind unterschiedliche Start- oder Endtemperaturen für die Berechnung der Heizzeiten und/oder der Kühlzeiten, also der Ansteuerzeiten (Stellwerte) für die Heizvorrichtung und/oder der Ansteuerzeiten (Stellwerte) für die Kühlvorrichtung berücksichtigt.

Zur Erlangung der Ansteuerzeit ($t_{Prozess(x)}$) wird zweckmäßiger Weise die Summe aus der Ansteuerzeit des Vorprozesses ($t_{Prozess(x-1)}$) der Zeit ($t_{startoffset}$) des momentanen Prozesses und der Zeit ($t_{endOffsetx-1}$) des vorangegangenen Prozesses ermittelt.

Mit einer so bestimmten Ansteuerungszeit ($t_{Prozess(x)}$), die entweder für das Pulsheizen (Heizprozess) oder das Pulskühlen (Kühlprozess) verwendet werden kann, werden eine Vielzahl von Charakteristiken des vorliegenden Systems wie auch gegebenenfalls Abweichungen während des Produktionsprozesses berücksichtigt.

Eine zur Durchführung des erfindungsgemäßen Verfahrens geeignete Vorrichtung ist eine Vorrichtung, welche mindestens ein Temperiergerät mit einer Heizvorrichtung, mindestens ein Temperiergerät mit einer Kühlvorrichtung sowie ein Spritzgießwerkzeug, Stellglieder und eine Regelungseinheit aufweist, welche regelnd auf die Stellglieder einwirken kann, wobei die Regeleinheit Signale in Abhängigkeit von einer Kavitätenwandtemperatur einer Kavität eines Spritzgießwerkzeuges zur Regelung der Stellglieder bereitstellt.

Mit einem solchen Grundaufbau kann in vorteilhafter und einfacher Art und Weise das erfindungsgemäße Verfahren durchgeführt werden. Für das erfindungsgemäße Verfahren sind insbesondere keine außergewöhnlichen Komponenten erforderlich, sodass das erfindungsgemäße Verfahren ohne großen apparativen Zusatzaufwand auch an bestehenden Kunststoffspritzgießmaschinen nachgerüstet oder durch Nachrüstung weniger Komponenten verwirklicht werden kann.

Als Heizvorrichtungen können insbesondere eine oder mehrere Einrichtungen ausgewählt aus der Gruppe

- Wasserheizeinrichtung;
- Ölheizeinrichtung;
- elektrische Heizeinrichtung;
- Heizpatronen;
- Heizeinrichtungen auf Induktionsbasis oder mittels Laser sowie keramische Heizungen;
- Heizvorrichtung auf der Basis eines Wärmeträgeröles und/oder Heißdampfes verwenden werden.

Als Kühlvorrichtung kann mindestens eine Einrichtung ausgewählt aus der Gruppe

- Wasserkühleinrichtung;
- Ölkühleinrichtung;

- elektrische Kühleinrichtung;
- Kühlpatronen;
- Kühlungen mittels Kältemittel und/oder $CO_2$ und/oder mittels eines Gases, z. B. Luft;
- Kühlvorrichtung auf der Basis eines Wärmeträgeröles und/oder Kohlendioxid verwendet werden.

Somit kann auch eine Vielzahl von Heiz- und/oder Kühleinrichtungstypen - auch in Kombination miteinander - verwendet werden, um das erfindungsgemäße Verfahren durchzuführen.

Besonders vorteilhaft ist es, dass die Vorrichtung zusätzlich einen Puffer aufweist, welcher dazu eingerichtet und ausgebildet ist, kaltes Temperiermedium und/oder heißes Temperiermedium bereitzustellen und bei Bedarf zusätzliches warmes oder kaltes Tempermedium in Temperierkreisläufe des zu temperierenden Systems einzuspeisen. Ein solcher Puffer kann insbesondere dann Sinn machen, wenn an bestimmten Stellen oder zu bestimmten Zeitpunkten des Prozesses eine besonders hohe Heiz- und/oder Kühlleistung erforderlich ist. Für einen solchen Fall kann durch eine Bereitstellung eines Puffers die Leistungsfähigkeit der Kühlvorrichtung geringgehalten werden, da beispielsweise für kurze Heiz- und/oder Kühlphasen nur eine Bevorratung von warmem Temperiermedium oder kaltem Temperiermedium im Puffer ausreichend ist. Somit trägt dies zum Einsparen von Energie bei und verringert die Kosten des Systems, da gegebenenfalls kleinere Temperiervorrichtungen eingesetzt werden können.

Sinnvollerweise weist die Vorrichtung eine Regelungseinrichtung auf, die eine Datenverarbeitungseinrichtung ist oder umfasst, welche die Verfahrensschritte gemäß dem erfindungsgemäßen Verfahren durchführen kann.

Im Folgenden wird die Erfindung anhand der Zeichnungen beispielhaft näher erläutert. Es zeigen:

Figur 1:    schematisch eine Aufheizkurve eines Spritzgießwerkzeuges während einer Lernphase von einer Minimal-temperatur bis zu einer Maximal-temperatur;

Figur 2:    schematisch eine Abkühlkurve eines Spritzgießwerkzeuges während einer Lernphase von einer Maximal-temperatur bis zu einer Minimal-temperatur;

Figur 3:    beispielhaft einen Temperaturverlauf einer Werkzeugwand bzw. eines Spritzgießwerkzeuges während einer Produktionsphase;

Figur 4:    schematisch eine Vorrichtung zur Durchführung des Verfahrens zur variothermen Temperierung von Spritzgießwerkzeugen.

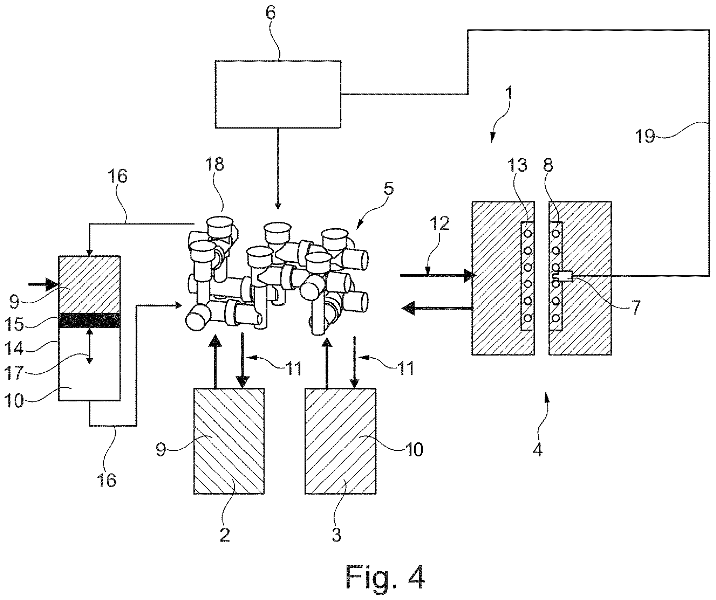

Eine Vorrichtung 1 zum Durchführen des erfindungsgemäßen Verfahrens ist in Figur 4 schematisch dargestellt und weist ein Temperiergerät 2 mit einer Heizvorrichtung, mindestens ein Temperiergerät 3 mit einer Kühlvorrichtung sowie ein Spritzgießwerkzeug 4, Stellglieder 5 und eine Regelungseinheit 6 auf. Die Regelungseinheit 6 kann auf die Stellglieder 5 regelnd einwirken, wobei die Regelungseinheit 6 Signale in Abhängigkeit von einer Kavitätenwandtemperatur, welche beispielsweise durch einen Temperatursensor 7 ermittelt wird, der in einer Kavität 8 des Spritzgießwerkzeuges 4 sitzt, verarbeitet.

Das Temperiergerät 2 mit einer Heizeinrichtung stellt ein relativ heißes Temperiermedium 9 im Vergleich zum Temperiergerät mit einer Kühleinrichtung 3, welches ein relativ kaltes Temperiermedium 10 zur Verfügung stellt, zur Verfügung.

Die Temperiergeräte 2, 3 sind über geeignete Rohrleitungen (schematisch dargestellt durch die Pfeile 11) mit den Stellgliedern 5 verbunden. Die Stellglieder 5 sind über geeignete Verrohrungen oder Verschlauchungen (Pfeile 12) mit dem Spritzgießwerkzeug 4 verbunden. Das Spritzgießwerkzeug 4 besitzt zumindest einen Temperierkreislauf 13, durch welchen abwechselnd heißes Temperiermedium 9 oder kaltes Temperiermedium 10 leitbar ist. Alternativ ist es auch möglich, dass das Spritzgießwerkzeug 4 zwei Temperierkreisläufe 13 besitzt, die hydraulisch voneinander getrennt sind. Einer der beiden Temperierkreisläufe 13 dient zur Durchleitung des kalten Temperiermediums 10, der andere Temperierkreislauf dient zur Durchleitung des heißen Temperiermediums 9 durch das Spritzgießwerkzeug 4 oder eine Spritzgießwerkzeughälfte.

Bevorzugt weist die Vorrichtung 1 einen Puffer 14 auf, welcher einen gewissen Vorrat an heißem Temperiermedium 9 und einen Vorrat an kaltem Temperiermedium 10 vorhält. Beispielsweise ist der Puffer 14 mit einem verschieblichen Kolbenelement 15 ausgestattet, welche eine Pufferkammer in einen Teilraum für heißes Temperiermedium 9 und einen Teilraum für kaltes Temperiermedium 10 unterteilt. Der Teilraum enthaltend heißes Temperiermedium 9 wie auch der Teilraum enthaltend kaltes Temperiermedium 10 sind jeweils über geeignete Rohrleitungen 16 mit entsprechenden Eingängen der Stellglieder 5 verbunden. Durch Bewegung des Kolbens 15 in der Doppelpfeilrichtung 17 kann kurzfristig eine zusätzliche Menge an kaltem Temperiermedium 10 (Bewegung des Kolbens 15 in Figur 4 nach unten) oder heißem Temperiermedium 9 (Bewegung des Kolbens 15 in Figur 4 nach oben) über die Stellglieder 5 in die Temperierkreisläufe 13 eingespeist werden.

Die Stellglieder 5 sind beispielsweise eine Anordnung aus verschiedenen Ventilen 18, welche lediglich schematisch angedeutet sind. Die Ventile 18 sind beispielsweise elektrisch ansteuerbare Ventile, welche mit der Regelungseinheit 6 verbunden sind und von dieser ansteuerbar sind. Je nach Ansteuerung der Ventile 18 kann entweder kaltes Temperiermedium 10 oder warmes Temperiermedium 9 in die Temperierkreisläufe 13 eingespeist werden, wobei bei Bedarf durch den Puffer 14 beispielsweise zum Erreichen von hohen Abkühl- oder Aufheizgradienten zusätzliches kaltes Temperiermedium 10 oder heißes Temperiermedium 9 eingespeist werden kann. Das Vorsehen eines Puffers 14 ermöglicht es, relativ kleine Heiz/Kühl- und/oder Pumpaggregate für die Temperiergeräte 2, 3 einzusetzen, und trotzdem Spritzenlasten, welche in einem Lern- und/oder Produktionszyklus auftreten, mittels des Puffers 14 abzufangen. Dies trägt zur Einsparung von Energie bei und senkt die Anlagenkosten.

Der Temperatursensor 7 steht über eine geeignete Signalleitung 19 mit der Regelungseinheit 6 in Verbindung. Selbstverständlich ist es möglich, dass eine Vielzahl von Temperatursensoren 7 über die Kavitätenwand der Kavität 8 verteilt angeordnet sind und separate Signale, welche eine lokale Kavitätenwandtemperatur repräsentieren an die Regelungseinheit 6 senden bzw. dieser zur Verfügung stellen.

Im vorliegenden Ausführungsbeispiel gemäß Figur 4 ist zur Vereinfachung des dargestellten Prinzips lediglich ein Temperatursensor 7 gezeigt. Es ist selbstverständlich auch möglich, mehrere Temperatursensoren 7, z. B. an unterschiedlichen Stellen der Kavitätenwand zu verwenden.

Des Weiteren ist in der Ausführungsform gemäß Figur 4 von einer hydraulischen Temperierung die Rede, bei der ein flüssiges kaltes Temperiermedium 10 und ein flüssiges heißes Temperiermedium 9 verwendet wird.

Selbstverständlich sind auch andere Arten des Heizens/Kühlens denkbar. Beispielsweise können auch elektrische Heiz- und/oder Kühlelemente oder als Temperiermedium Gase verwendet werden.

Wird nunmehr beispielsweise bei abgeschaltetem oder abgeklemmtem Temperiergerät 3 mit kühlem Temperiermedium heißes Temperiermedium 9 durch die Kühlkreisläufe 13 gepumpt, so wird sich die Kavitätenwand der Kavität 8 erwärmen.

Umgekehrt wird sie sich abkühlen, wenn anstelle des heißen Temperiermediums 9 kaltes Temperiermedium 10 durch die Temperierkreisläufe 13 geschickt wird.

Mit dieser Vorrichtung kann nachfolgend beschriebenes erfindungsgemäßes Verfahren mit Vorteil durchgeführt werden.

Ein erfindungsgemäßes Verfahren zur variothermen Temperierung des Spritzgießwerkzeuges 4 wird in zwei Phasen, einer Lernphase A und einer Produktionsphase B durchgeführt. Innerhalb der Lernphase A findet ein Ermitteln der Temperiercharakteristik des zu temperierenden Systems statt, welches zumindest das Spritzgießwerkzeug 4, die Temperiervorrichtungen 2, 3 sowie die entsprechenden (Rohr-) Leitungsverbindungen und die Stellglieder 5 sowie die Regelungseinheit 6 besitzt. Selbstverständlich sollte in der Kavität 8 des Spritzgießwerkzeuges 4 ein Temperatursensor 7 vorgesehen sein.

Dieses gesamte System, welches temperiert werden soll (das Spritzgießwerkzeug 4) bzw. für die Temperierung sorgen soll (Temperiergeräte 2, 3, Stellglieder 5 sowie die entsprechenden Verbindungen mit dem Spritzgießwerkzeug 4), besitzt eine bestimmte Temperiercharakteristik, welche beispielsweise durch die Kavitätenform der Kavität 8 im Spritzgießwerkzeug 4 beeinflusst wird. Weitere Einflussgrößen können die Leistungsfähigkeit der Temperiergeräte 2, 3 und die maximal mögliche Durchflussmenge an kaltem Temperiermedium 10 und/oder heißem Temperiermedium 9 sein.

Ein solches System aus den oben genannten Bestandteilen hat eine bestimmte Temperiercharakteristik, das heißt auf eine bestimmte Aktivität der Temperiergeräte 2 oder 3 erfolgt eine bestimmte Temperaturreaktion der Kavitätenwand der Kavität 8 im Spritzgießwerkzeug 4. Dies gilt es in der Lernphase A zu ermitteln.

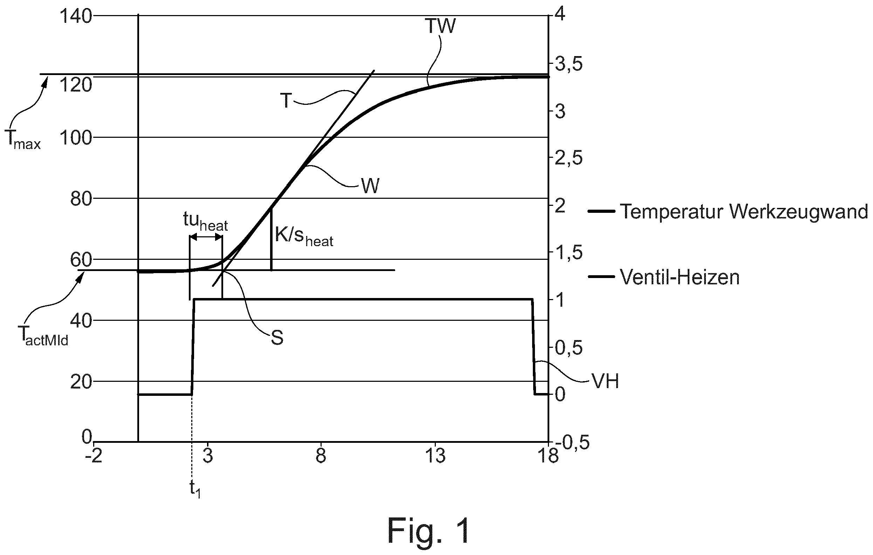

Figur 1 zeigt einen ersten Teilschritt hiervon.

Im Rahmen der Ermittlung der Temperiercharakteristik des Systems wird von einer aktuellen Formwerkzeugtemperatur (Kavitätenwandtemperatur $T_{actMld}$) ausgehend bei abgeschaltetem Temperiergerät 3 mit Kühleinrichtung das Temperiergerät 2 mit Heizeinrichtung eingeschaltet. Das Einschalten der Heiztemperierung erfolgt im dargestellten Beispiel gemäß Figur 1 zur Zeit $t_1$. Der Graph VH (Ventil-Heizen) ist in Figur 1 dargestellt und gibt eine Zeitspanne an, in der die Vorrichtung 1 das Spritzgießwerkzeug heizt. Als Reaktion auf die Heizung gibt der Graph TW die Temperaturreaktion an der Kavitätenwand der Kavität 8 an, welche vom Temperatursensor 7 gemessen wird. Nach dem Einschalten (Zeit $t_1$) erfolgt zunächst ein immer steiler ansteigender Temperaturanstieg an der Werkzeugwand, welche sich im weiteren Verlauf asymptotisch an eine maximal erreichbare Temperatur $T_{max}$ annähert, welche mit dem vorhandenen System (Spritzgießwerkzeug 4, Temperiergeräte 2, 3) erreichbar ist.

Der Graph TW weist in seinem Verlauf einen Wendepunkt W auf. Zur Ermittlung einer charakteristischen Größe für die Temperiercharakteristik des Systems hat es sich bewährt, im Wendepunkt W eine Tangente T an den Graph TW anzulegen. Im Wendepunkt W liegt die maximale Steigung der Aufheizkurve (Graph TW) vor. Die Tangente bildet einen Schnittpunkt S mit der Abszisse. Der Zeitraum, zwischen dem Beginn der Heizung (Zeitpunkt $t_1$) und dem Schnittpunkt S wird als Verzugszeit $tu_{heat}$ definiert. Die maximale Steigung der Tangente T ist durch einen Quotienten aus Temperatur und Heizzeit definiert, welcher in "Kelvin pro Heizzeit (K/$s_{heat}$)" angegeben wird.

Mit dieser Vorgehensweise ist ausgehend von einer aktuellen Temperatur $T_{actMld}$ des Spritzgießwerkzeuges 4 dessen Anwärmcharakteristik bis zur Temperatur $T_{max}$ ermittelbar und hieraus die Werte $K/s_{heat}$ und $tu_{heat}$ ermittelbar.

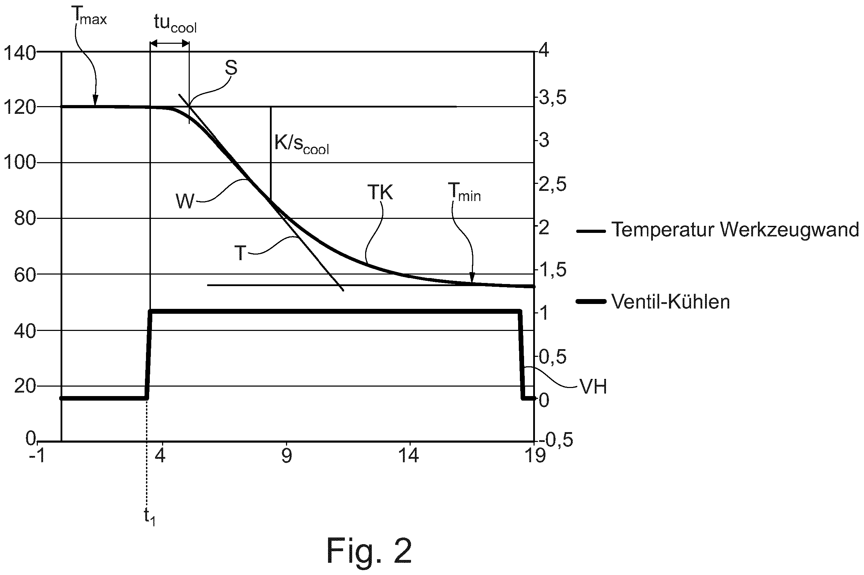

Analog erfolgt eine Ermittlung der Abkühlcharakteristik des Spritzgießwerkzeuges 4 ausgehend von einer maximal erreichbaren Temperatur $T_{max}$ (vergleiche Figur 2). In analoger Art und Weise zum Aufheizen wird im Rahmen der Ermittlung der Abkühlcharakteristik eine Abkühlkurve (Graph TK) ermittelt, welche sich von der maximalen Spritzgießwerkzeugtemperatur $T_{max}$ auf eine minimal erreichbare Temperatur $T_{min}$ absenken lässt. Hierzu wird bei ausgeschaltetem Temperiergerät 2 (Warmtemperiergerät) das Temperiergerät 3 mit kühlem Temperiermedium 10 eingeschaltet. Die eingeschaltete Kühlung ist mit dem Graph VK dargestellt. Auch im Rahmen der Ermittlung der Abkühlcharakteristik wird eine Tangente T an den Wendepunkt W gelegt, deren Steigung den maximalen Abkühlgradienten wiederspiegelt. Dieser Abkühlgradient kann in der Einheit Kelvin pro Kühlzeit angegeben werden ($K/s_{cool}$).

Diese Tangente schneidet ebenfalls die Abszisse im Schnittpunkt S, sodass sich eine Kühlverzugszeit $tu_{cool}$ ergibt, welche vom Zeitpunkt $t_1$ (Einschalten des Kühlaggregates) bis zum Schnittpunkt S der Tangente T mit der Abszisse ergibt.

Diese Charakterisierung des Aufwärm- bzw. Abkühlverhaltens des Systems erfolgt bevorzugt bei leerem Spritzgießwerkzeug, das heißt noch vollkommen ohne Schmelze. Hierdurch ist es nicht notwendig, die Lernphase mit einem Spritzgießwerkzeug, welches auf einer Kunststoffspritzgießmaschine montiert ist, durchzuführen. Ein weiterer Vorteil ist, dass der Einsatz von Kunststoffschmelze die Werkzeugtemperiercharakteristik bzw. die Systemtemperiercharakteristik nicht beeinflusst.

Die ermittelte Temperiercharakteristik des Systems wird bevorzugt in Form von werkzeugspezifische, insbesondere systemspezifische Stellwerte für Stellglieder gespeichert oder dem Werkzeug/System anderweitig zugeordnet.

Weitere Schritte in der Lernphase A sind:

Aus dieser Temperiercharakteristik kann beispielsweise durch Differenzbildung zwischen der maximal erreichbaren Temperatur $T_{max}$ und der minimal erreichbaren Temperatur $T_{min}$ eine mittlere Temperatur $T_{Basis}$ errechnet werden. Mit der mittleren Temperatur $T_{Basis}$ kann eine Ansteuerungszeit für die entsprechenden Heizventile ermittelt werden, welche notwendig ist, welche bei einem Heizen (Pulsheizen) von der minimalen Temperatur $T_{min}$ auf die mittlere Temperatur $T_{Basis}$ notwendig wird. Dies erfolgt unter Ausnutzung des ermittelten Aufheizgradienten $K/s_{heat}$ und der entsprechend ermittelten Verzögerungszeit $tu_{heat}$ nach der Formel:

$$t_{basisheat} = (( T_{Basis} - T_{min} ) / K/s_{heat} ) + tu_{heat}.$$

Es hat sich herausgestellt, dass nach dem Abschalten der Heizung bei einer Temperatur des Spritzgießwerkzeuges 4 unterhalb der maximal erreichbaren Temperatur $T_{max}$ ein Überschwingen der Temperatur über einen gewollten Zielwert hinaus stattfindet. Um dieses Überschwingen zu kompensieren, wird die Zeitspanne gemessen, bis nach dem Abschalten der Heizung keine signifikante Temperaturänderung mehr auftritt. Der dabei auftretende Temperaturüberschuss ($T_{basisheat}$) und die gemessene Nachschwingzeit ($t_{basisheatdead}$) wird ebenfalls gemessen und gespeichert. Hieraus wird eine Abweichung zwischen der mittleren Temperatur $T_{Basis}$ und der Temperatur $T_{basisheat}$ nach der Formel:

$$T_{Basisheaterror} = T_{Basisheat} - T_{Basis}$$

berechnet.

Analog erfolgt das Ermitteln eines Unterschwingens im Kühlfall, wodurch eine Nachschwingzeit im Kühlfall ($t_{basiscool}$) und eine im Unterschwingfall auftretende minimale Temperatur $T_{basiscool}$ gemessen und gespeichert wird. Hieraus ergibt sich eine Abweichung zwischen der mittleren Temperatur $T_{Basis}$ und der minimal auftretenden Unterschwingtemperatur $T_{basiscool}$ nach der Formel

$$T_{Basiscoolerror} = T_{Basis} - T_{Basiscool}.$$

Mit der Temperatur $T_{Basiscoolerror}$ beziehungsweise mit den Temperaturen $T_{Basiscoolheaterror}$ können unter Berücksichtigung der Überschwing-/ Unterschwingphänomene beim Heizen/Kühlen die Prozesszeiten $t_{Prozess1}$ für den Heizfall und den Kühlfall genauer bestimmt werden, um eine Solltemperatur $T_{Soll1}$ ausgehend von einer aktuellen Spritzgießwerkzeugtemperatur (Kavitätenwandtemperatur $T_{actMld}$) möglichst genau zu erreichen.

Eine vorbeschriebene Bestimmung der Zeiten $t_{Prozess1}$ sowohl für den Kühl- wie für den Heizfall wird zur besseren Eingrenzung und genaueren Bestimmung der Fehlertemperaturen $T_{Basisheaterror}$ und $T_{Basiscoolerror}$ mehrfach durchgeführt. Hierbei hat sich eine mehrfache Wiederholung bewährt.

Die Ansteuerzeiten der Heizvorrichtung und/oder der Kühlvorrichtung werden von einem Prozess zum nächsten durch entsprechende Start-Offset-Temperaturen $T_{startOffset}$ beziehungsweise Endtemperaturabweichungen $T_{endOffset}$

korrigiert, um am Beginn/Ende des einen Prozesses die Start-/End-Temperaturen des vorhergehenden Prozesses mit zu berücksichtigen. Mit diesen Offset-Temperaturen $T_{startOffest}$ und $T_{endOffset}$ lassen sich korrespondierende Offset-Zeiten $t_{startOffset}$ und $t_{endOffset}$ sowohl für das Heizen wie für das Kühlen ermitteln. Dies erfolgt nach den Formeln

Für Puls-Heizen:

$$t_{startOffset} = T_{startOffset} / K/s_{heat}$$

$$t_{endOffset} = T_{endOffset} / K/s_{heat}$$

Für Puls-Kühlen:

$$t_{startOffset} = T_{startOffset} / K/s_{cool}$$

$$t_{endOffset} = T_{endOffset} / K/s_{cool}$$

Somit lässt sich aus der Prozesszeit $t_{Prozess(x-1)}$ des vorhergehenden Prozesses und der Start-Offset-Zeit $t_{startoffset(x)}$ des aktuellen Prozesses und der Endoffsetzeit $t_{endoffset(x-1)}$ des vorhergehenden Prozesses die Prozesszeit $t_{Prozess(x)}$ für den aktuellen Prozess berechnen, welche für den aktuellen Heiz-/Kühlfall Anwendung findet. Hierdurch gelingt ein Lernen für den aktuellen Prozess aus den Umgebungsbedingungen und dem Ablauf des vorhergehenden Prozesses.

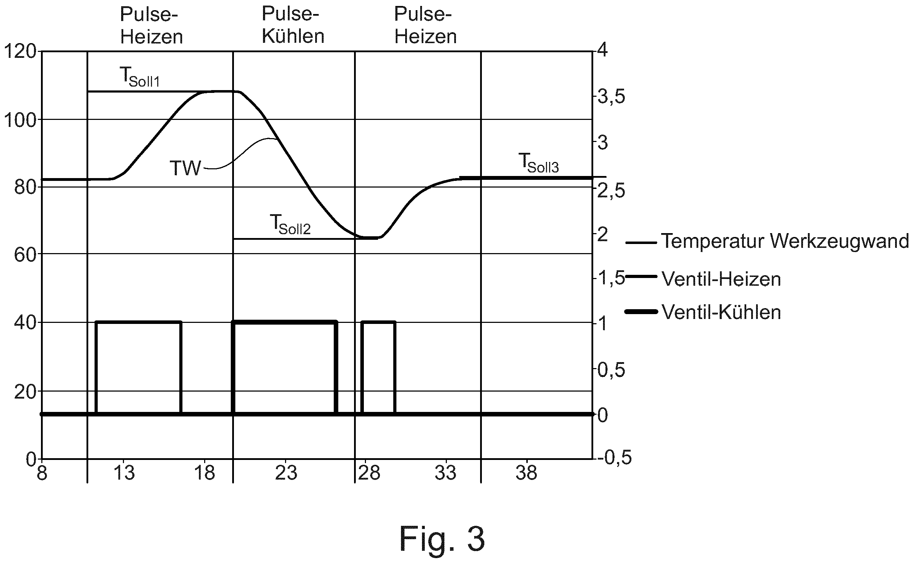

Im Ergebnis ist mit dem erfindungsgemäßen Verfahren und einer zur Durchführung des Verfahrens geeigneten Vorrichtung 1 ein gezieltes Abfahren eines Solltemperatur-Profiles, insbesondere unter Erreichung von expliziten Soll-temperaturen $T_{Soll1}$, $T_{Soll2}$, $T_{Soll3}$ sehr genau und anpassbar an variierende Umgebungsbedingungen möglich (vergleiche Figur 3).

Der Graph TW, welcher die Werkzeugtemperatur über der Zeit t angibt ist in Figur 3 dargestellt. Ebenso sind Zieltemperaturen $T_{Soll1}$ und $T_{Soll2}$ sowie $T_{Soll3}$ angegeben. In der unteren Hälfte des dargestellten Diagrammes gemäß Figur 3 sind Einschaltzeiten für den Betrieb des Temperiergerätes 2 mit einer Heizeinrichtung und des Temperiergerätes 3 mit einer Kühleinrichtung dargestellt. Von links nach rechts gesehen erfolgt bei einer Zeit t von ungefähr 10 Sekunden ein Einschalten des Temperiergeräts 2 mit der Heizeinrichtung, sodass der Graph TW von dieser Zeit ab (unter Berücksichtigung der Zeit $tu_{heat}$), bis zu einer Solltemperatur $T_1$ ansteigt, welche im Ausführungsbeispiel etwa bei 109° liegt. Auf dem Temperaturniveau $T_{Soll1}$ wird die Temperatur des Spritzgießwerkzeuges 4 eine Zeit lang etwa konstant gehalten. Bei der Zeit t von ungefähr 20 Sekunden beginnt das Kühlen durch Einschalten des Temperiergerätes 3 mit der Kühleinrichtung, sodass ein Abkühlen des Werkzeuges von $T_{Soll1}$ auf eine darunterliegende Temperatur $T_{Soll2}$ erfolgt. Ausgehend von der $T_{Soll2}$, vor deren Erreichen bereits das Temperiergerät 3 mit der Kühleinrichtung abgeschaltet wird, erfolgt ein erneutes Anwärmen des Werkzeuges durch Einschalten des Temperiergerätes 2 mit der Heizeinrichtung, sodass eine weitere Solltemperatur ($T_{Soll3}$) erreicht wird, welche im Ausführungsbeispiel zwischen den Solltemperaturen $T_{Soll1}$ und $T_{Soll2}$ liegt.

Es erfolgt somit zur Erreichung der Temperatur $T_{Soll1}$ ein sogenanntes Puls-Heizen. Ausgehend von der Temperatur $T_{Soll1}$ erfolgt zur Erreichung der Temperatur $T_{Soll2}$ ein sogenanntes Puls-Kühlen, wohingegen das Erreichen der Temperatur $T_{Soll3}$ ausgehend von der Temperatur $T_{Soll2}$ mittels eines Puls-Heizens erfolgt.

Es hat sich als zweckmäßig erwiesen, die Temperierung ausschließlich durch Einschalten entweder des Temperiergerätes 2 mit Heizeinrichtung oder des Temperiergerätes 3 mit Kühleinrichtung zu bewerkstelligen. Eine Vermischung der Temperiermedien findet bevorzugt nicht statt. Ein System mit getrennten kaltem Temperiermedium 10 und heißem Temperiermedium 9 ist insgesamt gesehen wesentlich dynamischer als ein System, welches durch Mischung von kaltem und warmem Temperiermedium versucht eine bestimmte Temperatur zu erreichen. Somit sind durch die getrennten Temperierkreisläufe dynamischere Puls-Heiz- und Puls-Kühl-Vorgänge möglich.

**Bezugszeichenliste**

| 1 | Vorrichtung |
|---|---|
| 2, 3 | Temperiergerät |
| 4 | Spritzgießwerkzeug |
| 5 | Stellglieder |
| 6 | Regelungseinheit |

| 7 | Temperatursensor |
| 8 | Kavität |
| 9 | Heißes Temperiermedium |
| 10 | Kaltes Temperiermedium |
| 11, 12 | Pfeile |
| 13 | Temperierkreislauf |
| 14 | Puffer |
| 15 | Verschiebliches Kolbenelement |
| 16 | Rohrleitungen |
| 17 | Doppelpfeilrichtung |
| 18 | Ventile |
| 19 | Signalleitung |

| A | Lernphase |
| B | Produktionsphase |
| S | Schnittpunkt |
| VH | Graph |
| TK | Graph |

| TW | Graph |
| $T_{max}$ | Maximal erreichbare Temperatur |
| t1 | Einschaltzeitpunkt |
| Tmin | Minimal erreichbare Temperatur |
| T | Tangente |
| W | Wendepunkt |

**Patentansprüche**

**1.** Verfahren zur variothermen Temperierung eines Spritzgießwerkzeuges unter Verwendung einer Temperiervorrichtung aufweisend zumindest die Schritte:

A) In einer Lernphase:

- Ermitteln einer Temperiercharakteristik des zu temperierenden Systems umfassend zumindest das Spritzgießwerkzeug und die Temperiervorrichtung zum Erhalt von systemindividuellen Stellwerten, mit denen Stellglieder der Temperiervorrichtung zur Erreichung eines Soll-Temperaturprofiles angesteuert werden können und

B) In einer Produktionsphase:

- Temperierung des Spritzgießwerkzeuges mit den in der Lernphase ermittelten Stellwerten;
- Ermittlung von Abweichungen eines Ist-Temperaturprofiles des Spritzgießwerkzeuges gegenüber dem Soll-Temperaturprofil während des Produktionszyklus und berechnen korrigierter Stellwerte für die Stellglieder aus diesen Abweichungen;
- Durchführen eines darauffolgenden Produktionsprozesses mit den korrigierten Stellwerten,
- wobei zur Ermittlung der Temperiercharakteristik des zu temperierenden Systems mindestens bestehend aus einem Heizgerät, einem Kühlgerät, Stellgliedern und einem Spritzgießwerkzeug eine maximal erreichbare Wandtemperatur ($T_{max}$) einer Kavität des Spritzgießwerkzeuges ermittelt und gespeichert wird und wobei

ausgehend von der Temperatur ($T_{max}$) die Kühlung bei abgeschalteter Heizung gestartet wird, wobei eine maximale negative Steigung in Kelvin pro Sekunde am Wendepunkt (W) der Kühlkurve (TK) bestimmt wird ($K/s_{cool}$) und an den Wendepunkt (W) der Kühlkurve (TK) eine Tangente (T) gelegt wird, wobei ein Schnittpunkt der Tangente (T) mit der Abszisse ermittelt wird und eine Verzugszeit ($tu_{cool}$) als zeitlicher Abstand zwischen dem Beginn der Kühlung und dem Schnittpunkt der Tangente (T) mit der Abszisse definiert wird.

**2.** Verfahren nach Anspruch 1, wobei

A) In der Lernphase:

A1) zum Ermitteln einer Temperiercharakteristik des zu temperierenden Systems;
ein Berechnen von Ansteuerzeiten für Heiz- und/oder Kühlvorrichtungen der Temperiervorrichtung zur Erreichung eines zeitlichen Soll-Temperaturprofils des Spritzgießwerkzeuges für ein herzustellendes Formteil erfolgt;
A2) eine Evaluation des Soll-Temperaturprofils in mindestens einem Evaluierungszyklus und bedarfsweises Korrigieren der Ansteuerungszeiten durchgeführt wird und
A3) ein Speichern zumindest der korrigierten Ansteuerzeiten aus Schritt A3) als Stellwerte für das zu temperierende System, insbesondere dessen Stellglieder erfolgt und

B) In der Produktionsphase:

B1) während eines ersten Produktionszyklus ein Abfahren des Temperaturprofils mit den Stellwerten aus Schritt A3) erfolgt;
B2) ein Ermitteln der Ist-Temperaturen und ein Vergleich mit korrespondierenden Soll-Temperaturen des Soll-Temperaturprofiles des Spritzgießwerkzeuges erfolgt;
B3) eine Berechnung korrigierter Stellwerte, nämlich Ansteuerzeiten für die Stellglieder des darauffolgenden Produktionszyklus aus Abweichungen ermittelt im Schritt B2) erfolgt und
B4) ein Durchführen des darauffolgenden Produktionszyklus mit den korrigierten Stellwerten aus Schritt B3) erfolgt und
B5) die Schritte B2) bis B5) während weiterer Produktionszyklen wiederholt werden.

**3.** Verfahren nach Anspruch 1 oder 2,
**dadurch gekennzeichnet, dass**

als Heiz- und/oder Kühleinrichtungen der Temperiervorrichtung zumindest eine oder eine Kombination aus der Gruppe:

- Wasserheiz- und/oder Wasserkühleinrichtung;
- Ölheiz- und/oder Ölkühleinrichtung;
- elektrische Heiz- und/oder elektrische Kühleinrichtung;
- Heiz- und/oder Kühlpatronen;
- Heizeinrichtungen auf Induktionsbasis oder mittels Laser sowie keramische Heizungen;
- Kältemittelkühlvorrichtungen und/oder $CO_2$-Kühlvorrichtungen und/oder eine Kühlung mittels eines Gases, z. B. Luft;
- Heizvorrichtung und/oder Kühlvorrichtung auf der Basis eines Wärmeträgeröles und/oder Heißdampfes

verwendet werden.

**4.** Verfahren nach einem der vorangegangenen Ansprüche,
**dadurch gekennzeichnet, dass**
der Schritt A ohne Befüllung des Spritzgießwerkzeuges mit Formmasse durchgeführt wird.

**5.** Verfahren nach einem der vorangegangenen Ansprüche,
**dadurch gekennzeichnet, dass**
zur Ermittlung der Temperiercharakteristik außerdem eine minimal erreichbare Wandtemperatur ($T_{min}$) einer Kavität des Spritzgießwerkzeuges ermittelt und gespeichert wird.

**6.** Verfahren nach einem der vorangegangenen Ansprüche,
**dadurch gekennzeichnet, dass**
während eines Aufheizvorganges die maximale Steigung einer Aufheizkurve an deren Wendepunkt (W) in Kelvin pro Sekunde ($K/s_{heat}$) bestimmt wird.

**7.** Verfahren nach einem der vorangegangenen Ansprüche,
**dadurch gekennzeichnet, dass**
an den Wendepunkt der Aufheizkurve eine Tangente (T) an die Aufheizkurve gelegt wird und ein Schnittpunkt der Tangente (T) mit der Abszisse gebildet wird, wobei als Verzugszeit ($tu_{heat}$) der zeitliche Abstand zwischen dem Beginn der Heizung und dem Schnittpunkt der Tangente (T) mit der Abszisse definiert wird.

8. Verfahren nach Anspruch 5,
**dadurch gekennzeichnet, dass**
eine mittlere Temperatur ($T_{Basis}$) zwischen der minimalen Temperatur ($T_{min}$) und der maximalen Temperatur ($T_{max}$) errechnet wird.

9. Verfahren nach Anspruch 8,
**dadurch gekennzeichnet, dass**

aus der Formel

$$t_{basisheat} = (( T_{Basis} - T_{min} ) / K/s_{heat} ) + tu_{heat}$$

die Ansteuerzeit ($t_{basisheat}$) für ein Pulsheizen von der minimalen Temperatur ($T_{min}$) auf die mittlere Temperatur ($T_{Basis}$) errechnet wird.

10. Verfahren nach Anspruch 9,
**dadurch gekennzeichnet, dass**
nach dem Abschalten der Heizung, das heißt nach Ablauf der Zeit ($t_{basisheat}$) eine Zeitspanne gemessen wird, bis keine weitere signifikante Temperaturänderung am Temperatursensor (7) mehr auftritt, wobei eine Temperatur ($T_{basisheat}$) und eine Nachschwingzeit (Totzeit) ($t_{Basisheatdead}$) gemessen und gespeichert wird.

11. Verfahren nach Anspruch 10,
**dadurch gekennzeichnet, dass**

eine Abweichung zwischen der mittleren Temperatur ($T_{Basis}$) und der Temperatur ($T_{Basisheat}$) nach der Formel

$$T_{Basisheaterror} = T_{Basisheat} - T_{Basis}$$

berechnet wird.

12. Verfahren nach Anspruch 8,
**dadurch gekennzeichnet, dass**

die Kühlung angesteuert wird, während die Heizung abgeschaltet ist, bis die maximale Temperatur ($T_{max}$) am Temperatursensor (7) erreicht ist und aus der Formel

$$t_{basiscool} = (( T_{max} - T_{Basis} ) / K/s_{cool} ) + tu_{cool}$$

die Ansteuerzeit ($t_{basiscool}$) für ein Pulskühlen von der maximalen Temperatur ($T_{max}$) auf die mittlere Temperatur ($T_{Basis}$) berechnet wird.

13. Verfahren nach Anspruch 12,
**dadurch gekennzeichnet, dass**

ausgehend von der maximalen Temperatur ($T_{max}$) aus einem vorherigen Lernschritt die Kühlung angesteuert und nach der Zeit ($t_{basiscool}$) abgeschaltet wird, wobei im Anschluss daran diejenige Zeit gemessen wird, bis keine signifikante Temperaturänderung mehr am Temperatursensor (7) in der Kavität (8) messbar ist, wobei die Temperatur ($T_{basiscool}$) und die Nachschwingzeit (Totzeit) ($t_{Basiscooldead}$) gemessen und gespeichert wird und die Abweichung von ($T_{Basis}$) zu ($T_{Basiscool}$) nach der Formel

$$T_{Basiscoolerror} = T_{Basis} - T_{Basiscool}$$

berechnet wird.

**14.** Verfahren nach Anspruch 13,
**dadurch gekennzeichnet, dass**

in einem Prozessablauf für zumindest einen Puls-Heizen- oder zumindest einen Puls-Kühlenschritt Ansteuerzeiten der Heizvorrichtung und/oder der Kühlvorrichtung ausgehend von einer aktuellen Temperatur der Kavitätenwand ($T_{actMld}$) gemessen und gespeichert wird, wobei eine Solltemperatur ($T_{Soll1}$) aus dem aktuellen Schritt ermittelt wird und wenn die Solltemperatur ($T_{Soll1}$) größer ist als die Temperatur ($T_{actMld}$), im ersten Optimierungslauf eine Zeit ($t_{Prozess1}$) nach der Formel

$$t_{Prozess1} = (( T_{Soll1} - T_{actMld} ) / K/s_{heat} ) + tu_{heat} + T_{Basisheaterror} / K/s_{heat}$$

berechnet wird.

**15.** Verfahren nach Anspruch 13,
**dadurch gekennzeichnet, dass**

für den Fall, dass die Solltemperatur ($T_{Soll1}$) kleiner ist als die aktuelle Temperatur ($T_{actMld}$) die Zeit ($t_{Prozess1}$) aus der Formel

$$t_{Prozess1} = (( T_{Soll1} - T_{actMld} ) / K/s_{cool} ) + tu_{cool} + T_{Basiscoolerror} / K/s_{cool}$$

berechnet wird.

**16.** Verfahren nach einem der Ansprüche 14 oder 15,
**dadurch gekennzeichnet, dass**
die Berechnung der Zeit ($t_{Prozess1}$) für weitere Prozessschritte analog durchgeführt wird.

**17.** Verfahren nach einem der Ansprüche 13 bis 16,
**dadurch gekennzeichnet, dass**
die Ermittlung der Zeit ($t_{Prozess1}$) für einen Puls-Heizprozess oder für einen PulsKühlprozess wiederholt durchgeführt wird.

**18.** Verfahren nach einem der Ansprüche 13 bis 17,
**dadurch gekennzeichnet, dass**
während weiterer Durchläufe die Ansteuerzeiten der Heizvorrichtung und/oder der Kühlvorrichtung um eine Starttemperaturabweichung ($T_{startOffset}$) und/oder eine Endtemperaturabweichung ($T_{endOffset}$) korrigiert werden, wobei nachfolgend aufgelistete Formeln verwendet werden:

$$T_{startOffsetx} = T_{actMldx} - T_{(actMldx)\,n-1}$$

$$T_{endOffset} = T_{Prozessx} - T_{(Prozessx)\,n-1}$$

wobei
(n-1) die entsprechende Temperatur aus dem vorangegangenen Durchlauf ist.

**19.** Verfahren nach Anspruch 18,
**dadurch gekennzeichnet, dass**
eine zur Starttemperaturabweichung ($T_{startOffset}$) und/oder zur Endtemperaturabweichung ($T_{endOffset}$) korrespondierende Zeit ($t_{startOffset}$) und ($t_{endOffset}$) in Abhängigkeit von Puls-Heizen ($K/s_{heat}$) oder Puls-Kühlen ($K/s_{cool}$) berechnet wird, wobei gilt:

Für Puls-Heizen:

$$t_{startOffset} = T_{startOffset} / K/s_{heat}$$

$$t_{endOffset} = T_{endOffset} / K/s_{heat}$$

Für Puls-Kühlen:

$$t_{startOffset} = T_{startOffset} / K/s_{cool}$$

$$t_{endOffset} = T_{endOffset} / K/s_{cool}$$

**20.** Verfahren nach Anspruch 19,
**dadurch gekennzeichnet, dass**
eine Ansteuerzeit ($t_{Prozess(x)}$) für einen Heizprozess und/oder einen Kühlprozess aus der Ansteuerzeit ($t_{prozess(x-1)}$) aus dem vorherigen Prozess plus der Zeit ($t_{startOffset}$) aus dem aktuellen Prozess plus der Zeit ($t_{endOffset}$) aus dem vorhergehenden Prozess ermittelt wird, was sich formelmäßig darstellen lässt als:

$$t_{Prozess(x)} = t_{Prozess(x-1)} + t_{startOffsetx} + t_{endOffset(x-1)}$$

## Claims

**1.** A method for the variothermal temperature control of an injection mould using a temperature control device having at least the steps:

A) In a learning phase:

- determining a temperature control
characteristic of the system which is to be temperature-controlled comprising at least the injection mould and the temperature control device, in order to obtain individual control values for the system, with which control elements of the temperature control device can be actuated in order to obtain a nominal temperature profile and

B) In a production phase:

- temperature control of the injection mould with the control values determined during the learning phase;
- determining deviations of an actual temperature profile of the injection mould in relation to the nominal temperature profile during the production cycle and calculating corrected control values for the control elements from these deviations;
- carrying out a subsequent production process with the corrected control values,
- wherein for determining the temperature control characteristic of the system which is to be temperature-controlled, at least consisting of a heating apparatus, a cooling apparatus, control elements and an injection mould, a maximum achievable wall temperature ($T_{max}$) of a cavity of the injection mould is determined and stored and wherein
- proceeding from the temperature ($T_{max}$) the cooling is started with heating switched off, wherein a maximum negative rise is determined in Kelvin per second at the turning point (W) of the cooling curve (TK) ($K/s_{cool}$) and a tangent (T) is applied at the turning point (W) of the cooling curve (TK), wherein an intersection of the tangent (T) with the abscissa is determined and a delay time ($tu_{cool}$) is defined as a chronological interval between the start of the cooling and the intersection of the tangent (T) with the abscissa.

**2.** The method according to Claim 1, wherein

A) In the learning phase:

A1) for determining a temperature control characteristic of the system which is to be temperature-controlled; a calculating takes place of actuation times for heating- and/or cooling devices of the temperature control device for achieving a chronological nominal temperature profile of the injection mould for a moulded part which is to be produced;

A2) an evaluation of the nominal temperature profile is carried out in at least one evaluation cycle and if necessary correcting of the actuation time is carried out and

A3) a storing takes place at least of the corrected actuation times from step A3) as control values for the system which is to be temperature-controlled, in particular its control elements and

B) In the production phase:

B1) during a first production cycle a starting off of the temperature profile with the control values of step A3) takes place;

B2) a determining takes place of the actual temperatures and a comparison with corresponding nominal temperatures of the nominal temperature profile of the injection mould;

B3) a calculation takes place of corrected control values, namely actuation times for the control elements of the subsequent production cycle from deviations determined in step B2) and

B4) a carrying out of the subsequent production cycle takes place with the corrected control values from step B3) and

B5) the steps B2) to B5) are repeated during further production cycles.

3. The method according to Claim 1 or 2,
**characterized in that**
as heating and/or cooling devices of the temperature control device at least one or a combination of the group:

- water heating- and/or water cooling device;
- oil heating- and/or oil cooling device;
- electric heating- and/or electric cooling device;
- heating- and/or cooling cartridges;
- heating devices based on induction or by means of laser and ceramic heating arrangements;
- refrigerant cooling devices and/or $CO_2$ cooling devices and/or a cooling by means of a gas, e.g. air;
- heating device and/or cooling device based on a heat transfer oil and/or on a superheated steam

are used.

4. The method according to one of the preceding claims,
**characterized in that**
the step A is carried out without filling the injection mould with moulding material.

5. The method according to one of the preceding claims,
**characterized in that**
for determining the temperature control characteristic, in addition a minimum achievable wall temperature ($T_{min}$)of a cavity of the injection mould is determined and stored.

6. The method according to one of the preceding claims,
**characterized in that**
during a heating-up process, the maximum rise of a heating curve at its turning point (W) is determined in Kelvin per second ($K/s_{heat}$).

7. The method according to one of the preceding claims,
**characterized in that**
at the turning point of the heating curve, a tangent (T) is applied to the heating curve, and an intersection of the tangent (T) with the abscissa is formed, wherein the chronological interval between the start of the heating and intersection of the tangent (T) with the abscissa is defined as delay time ($tu_{heat}$).

8. The method according to Claim 5,
**characterized in that**
a mean temperature ($T_{Basis}$) is calculated between the minimum temperature ($T_{min}$) and the maximum temperature ($T_{max}$).

9. The method according to Claim 8,
**characterized in that**

from the formula

$$t_{basisheat} = ((T_{Basis} - T_{min}) / K/S_{heat}) + tu_{heat}$$

the actuation time ($t_{basisheat}$) is calculated for a pulse heating from the minimum temperature ($T_{min}$)to the mean temperature ($T_{Basis}$).

10. The method according to Claim 9,
**characterized in that**
after the switching off of the heating, i.e. after the time ($t_{basisheat}$) has elapsed, a time span is measured until no further significant temperature change occurs at the temperature sensor (7), wherein a temperature ($T_{basisheat}$) and a reverberation time (dead time) ($t_{Basisheatdead}$) is measured and stored.

11. The method according to Claim 10,
**characterized in that**
a deviation is calculated between the mean temperature ($T_{Basis}$) and the temperature ($T_{Basisheat}$) according to the formula

$$T_{Basisheaterror} = T_{Basisheat} - T_{Basis}$$

12. The method according to Claim 8,
**characterized in that**

the cooling is actuated, while the heating is switched off, until the maximum temperature ($T_{max}$) is reached at the temperature sensor (7) and from the formula

$$t_{basiscool} = ((T_{max} - T_{Basis}) / K/s_{cool}) + tu_{cool}$$

the actuation time ($t_{basiscool}$) for a pulse cooling from the maximum temperature ($T_{max}$) to the mean temperature ($T_{Basis}$) is calculated.

13. The method according to Claim 12,
**characterized in that**
proceeding from the maximum temperature ($T_{max}$) from a previous learning step the cooling is actuated and is switched off after the time ($t_{basiscool}$), wherein following thereon, the time is measured until no more significant temperature change is measurable at the temperature sensor (7) in the cavity (8), wherein the temperature ($T_{basiscool}$) and the reverberation time (dead time) ($t_{Basiscooldead}$) is measured and stored, and the deviation is calculated from ($T_{Basis}$) to ($T_{Basiscool}$) according to the formula

$$T_{Basiscoolerror} = T_{Basis} - T_{Basiscool}$$

14. The method according to Claim 13,
**characterized in that**
in a process sequence for at least one pulse heating- or at least one pulse cooling step, actuation times of the heating device and/or of the cooling device are measured and stored proceeding from a current temperature of the cavity wall ($T_{actMld}$), wherein a nominal temperature ($T_{Soll}$) is determined from the current step and when the nominal temperature ($T_{Soll}$) is greater than the temperature ($T_{actMld}$), in the first optimisation run a time ($t_{Prozess1}$) is calculated according to the formula

$$t_{Prozess1} = ((T_{Soll1} - T_{actMld}) / K / S_{heat}) + tu_{heat} + T_{Basisheaterror} / K / s_{heat}$$

15. The method according to Claim 13,
**characterized in that**
for the case where the nominal temperature ($T_{Soll1}$) is lower than the actual temperature ($T_{actMld}$) the time ($t_{Prozess1}$) is calculated from the formula

$$t_{Prozess1} = ((T_{Soll1} - T_{actMld}) / K / S_{cool}) + tu_{cool} + T_{Basiscoolerror} / K / s_{cool}$$

**16.** The method according to one of Claims 14 or 15,
**characterized in that**
the calculation of the time ($t_{Prozess1}$) for further process steps is carried out in an analogous manner.

**17.** The method according to one of Claims 13 to 16,
**characterized in that**
determining of the time ($t_{Prozess1}$) for a pulse heating process or for a pulse cooling process is carried out repeatedly.

**18.** The method according to one of Claims 13 to 17,
**characterized in that**
during further passages the actuation times of the heating device and/or of the cooling device are corrected by a start temperature deviation ($T_{startOffset}$) and/or an end temperature deviation ($T_{endOffset}$), wherein formulae listed below are used:

$$T_{startOffsetx} = T_{actMldx} - T_{(actMldx)\ n-1}$$

$$T_{endOffset} = T_{Prozessx} - T_{(Prozessx)\ n-1}$$

wherein
(n-1) is the corresponding temperature from the preceding passage.

**19.** The method according to Claim 18,
**characterized in that**
a time ($t_{startOffset}$) and ($t_{endOffset}$) corresponding to the start temperature deviation ($T_{startOffset}$) and/or to the end temperature deviation ($T_{endOffset}$) is calculated depending on pulse heating ($K/S_{heat}$) or pulse cooling ($K/S_{cool}$), wherein:

For pulse heating:

$$t_{startOffset} = T_{startOffset}/K/s_{heat}$$

$$t_{endOffset} = T_{endOffset}/K/s_{heat}$$

For pulse cooling:

$$t_{startOffset} = T_{startOffset}/K/s_{cool}$$

$$t_{endOffset} = T_{endOffset}/K/s_{cool}$$

**20.** The method according to Claim 19,
**characterized in that**
an actuation time ($t_{Prozess(x)}$) for a heating process and/or a cooling process is determined from the actuation time ($t_{Prozess(x-1)}$) from the previous process plus the time ($t_{startOffset}$) from the current process plus the time ($t_{endOffset}$) from the preceding process, which can be represented according to a formula as:

$$t_{Prozess(x)} = t_{Prozess(x-1)} + t_{startOffsetx} + t_{endOffset(x-1)}$$

**Revendications**

**1.** Procédé de thermorégulation variothermique d'un outil de moulage par injection par utilisation d'un dispositif de mise en température présentant au moins les étapes suivantes :

A) dans une phase d'apprentissage :

- détermination d'une caractéristique de mise en température du système à mettre en température comprenant au moins l'outil de moulage par injection et le dispositif de mise en température pour obtenir des valeurs de réglage individuelles au système avec lesquelles des membres de réglage du dispositif de mise en température peuvent être commandés pour obtenir un profil de température de consigne et

B) dans une phase de production :

- mise en température de l'outil de moulage par injection avec les valeurs de réglage déterminées dans la phase d'apprentissage ;
- détermination d'écarts d'un profil de température réelle de l'outil de moulage par injection par rapport au profil de température de consigne pendant le cycle de production et calcul de valeurs de réglage corrigées pour les membres de réglage à partir de ces écarts ;
- exécution d'un processus de production suivant avec les valeurs de réglage corrigées,
- dans lequel pour déterminer la caractéristique de mise en température du système à mettre en température composé au moins d'un dispositif de chauffage, d'un dispositif de refroidissement, de membres de réglage et d'un outil de moulage par injection, une température de paroi maximale ($T_{max}$) pouvant être atteinte d'une cavité de l'outil de moulage par injection est déterminée et enregistrée et dans lequel
- en partant de la température ($T_{max}$), le refroidissement est démarré chauffage éteint, dans lequel une pente maximale négative ($K/s_{cool}$) est déterminée en Kelvin par seconde sur le point d'inflexion (W) de la courbe de refroidissement (TK) et une tangente (T) est appliquée au point d'inflexion (W) de la courbe de refroidissement (TK), dans lequel un point d'intersection de la tangente (T) avec l'abscisse est déterminé et un temps de retard ($tu_{cool}$) est défini en tant qu'écart temporel entre le début du refroidissement et le point d'intersection de la tangente (T) avec l'abscisse.

2. Procédé selon la revendication 1, dans lequel

A) dans la phase d'apprentissage :

A1) pour déterminer une caractéristique de mise en température du système à mettre en température ; un calcul de temps de commande est effectué pour des dispositifs de chauffage et/ou de refroidissement du dispositif de mise en température pour obtenir un profil de température de consigne temporel de l'outil de moulage par injection pour une pièce moulée à fabriquer ;
A2) une évaluation du profil de température de consigne dans au moins un cycle d'évaluation est effectuée, et si besoin, correction des temps de commande et
A3) un enregistrement au moins des temps de commande corrigés de l'étape A3) en tant que valeurs de réglage est effectué pour le système à mettre en température, en particulier de ses membres de réglage, et

B) dans la phase de production :

B1) pendant un premier cycle de production, un arrêt du profil de température est effectué avec les valeurs de réglage de l'étape A3),
B2) une détermination des valeurs réelles et une comparaison avec des températures de consigne correspondantes du profil de température de consigne de l'outil de moulage par injection sont effectuées ;
B3) un calcul de valeurs de réglage corrigées, à savoir des temps de réglage pour les membres de réglage du cycle de production suivant, est effectué à partir d'écarts calculés à l'étape B2) et
B4) une exécution du cycle de production suivant avec les valeurs de réglage corrigées de l'étape B3) est effectuée et
B5) les étapes B2) à B5) sont répétées pendant d'autres cycles de production.

3. Procédé selon la revendication 1 ou 2,
**caractérisé en ce que**
en tant que dispositifs de chauffage et/ou de refroidissement du dispositif de mise en température sont utilisés au moins un ou une combinaison du groupe :

- dispositif de chauffage d'eau et/ou de refroidissement d'eau ;
- dispositif de chauffage de fioul et/ou de refroidissement de fioul .
- dispositif de chauffage électrique et/ou de refroidissement électrique ;
- cartouches de chauffage et/ou de refroidissement ;
- dispositifs de chauffage basés sur induction ou par laser ainsi que chauffages céramique ;
- dispositifs de refroidissement par réfrigérants et/ou dispositifs de refroidissement au $CO_2$ et/ou un refroidissement par un gaz, par ex. de l'air ;
- dispositif de chauffage et/ou de refroidissement à base d'une huile caloporteuse et/ou de vapeur chaude.

**4.** Procédé selon l'une des revendications précédentes, **caractérisé en ce que** l'étape A est effectuée sans remplissage de l'outil de moulage par injection avec une matière à mouler.

**5.** Procédé selon l'une des revendications précédentes, **caractérisé en ce que** pour déterminer la caractéristique de mise en température, une température de paroi minimale ($T_{min}$) pouvant être atteinte d'une cavité de l'outil de moulage par injection est en outre déterminée et enregistrée.

**6.** Procédé selon l'une des revendications précédentes, **caractérisé en ce que** pendant une opération de chauffage, la pente maximale d'une courbe de chauffage est déterminée en Kelvin par seconde ($K/S_{heat}$) à son point d' inflexion (W) .

**7.** Procédé selon l'une des revendications précédentes, **caractérisé en ce qu'**au point d'inflexion de la courbe de chauffage, une tangente (T) est appliquée à la courbe de chauffage et un point d'intersection de la tangente (T) est formé avec l'abscisse, dans lequel l'écart temporel entre le début du chauffage et le point d'intersection de la tangente (T) avec l'abscisse est défini en tant que temps de retard ($tu_{heat}$).

**8.** Procédé selon la revendication 5, **caractérisé en ce qu'**une température moyenne ($T_{Basis}$) est calculée entre la température minimale ($T_{min}$) et la température maximale ($T_{max}$).

**9.** Procédé selon la revendication 8, **caractérisé en ce qu'**en partant de la formule

$$t_{basisheat} = ((T_{Basis} - T_{min})/K/S_{heat}) + tu_{heat},$$

la durée de commande ($t_{basisheat}$) est calculée pour un chauffage pulsé de la température minimale ($T_{min}$) à la température moyenne ($T_{basis}$).

**10.** Procédé selon la revendication 9, **caractérisé en ce qu'**après l'arrêt du chauffage, c'est-à-dire une fois le temps ($t_{basisheat}$) écoulé, une période temporelle est mesurée jusqu'à ce qu'il ne se produise plus aucun autre changement de température significatif sur le capteur de température (7), dans lequel une température ($T_{basisheat}$) et un temps de postoscillation (temps de retard) ($t_{Basisheatdead}$) sont mesurés et enregistrés.

**11.** Procédé selon la revendication 10, **caractérisé en ce qu'**un écart entre la température moyenne ($T_{Basis}$) et la température ($T_{Basisheat}$) est calculé selon la formule

$$T_{Basisheaterror} = T_{Basisheat} - T_{Basis}.$$

**12.** Procédé selon la revendication 8, **caractérisé en ce que** le refroidissement est commandé pendant que le chauffage est à l'arrêt, jusqu'à ce que la température maximale ($T_{max}$) soit atteinte sur le capteur de température (7), et à partir de la formule

$$t_{basiscool} = ((T_{max} - T_{Basis})/K/s_{cool}) + tu_{cool},$$

le temps de commande ($t_{basiscool}$) est calculé pour un refroidissement pulsé de la température maximale ($T_{max}$) à la température moyenne ($T_{Basis}$).

**13.** Procédé la revendication 12, **caractérisé en ce qu'**en partant de la température maximale ($T_{max}$) d'une étape d'apprentissage précédente, le refroidissement est commandé et coupé après le temps ($t_{basiscool}$), dans lequel le temps jusqu'à ce que plus aucun changement de température significatif ne puisse être mesuré sur le capteur de température (7) dans la cavité (8) est ensuite mesuré, dans lequel la température ($T_{basiscool}$) et le temps de postoscillation (temps de retard) ($t_{Basiscooldead}$) sont mesurés et enregistrés et l'écart de ($T_{Basis}$) à ($T_{Basiscool}$) est calculé selon la formule

$$T_{Basiscoolerror} = T_{Basis} - T_{Basiscool}.$$

14. Procédé selon la revendication 13, **caractérisé en ce que** dans un déroulement de procédé pour au moins une étape de chauffage pulsé ou au moins une étape de refroidissement pulsé, des temps de commande du dispositif de chauffage et/ou du dispositif de refroidissement sont mesurés et enregistrés en partant d'une température actuelle de la paroi de cavité ($T_{actMld}$), dans lequel une température de consigne ($T_{Soll1}$) est déterminée à partir de l'étape actuelle et lorsque la température de consigne ($T_{Soll1}$) est supérieure à la température ($T_{actMld}$), un temps ($t_{Prozess1}$) est calculé dans une première passe d'optimisation, selon la formule

$$t_{Prozess1} = ((T_{Soll1} - T_{actMld}) / K/S_{heat}) + tu_{heat} + T_{Basisheaterror} / K/S_{heat}.$$

15. Procédé selon la revendication 13, **caractérisé en ce que** dans le cas où la température de consigne ($T_{Soll1}$) est inférieure à la température actuelle ($T_{actMld}$), le temps ($t_{Prozess1}$) est calculé selon la formule

$$t_{Prozess1} = ((T_{Soll1} - T_{actMld}) / K/S_{cool}) + tu_{cool} + T_{Basiscollerror} / K/S_{cool}.$$

16. Procédé selon l'une des revendications 14 ou 15, **caractérisé en ce que** le calcul du temps ($t_{Prozess1}$) est effectué de manière analogue pour d'autres étapes de procédé.

17. Procédé selon l'une des revendications 13 à 16, **caractérisé en ce que** le calcul du temps ($t_{Prozess1}$) est effectué de manière répétée pour un procédé de chauffage pulsé ou pour un procédé de refroidissement pulsé.

18. Procédé selon l'une des revendications 13 à 17, **caractérisé en ce que** pendant d'autres passes, les temps de commande du dispositif de chauffage et/ou du dispositif de refroidissement sont corrigés d'un écart de température de départ ($T_{startOffset}$) et/ou d'un écart de température de fin ($T_{endOffset}$), dans lequel les formules listées ci-après sont utilisées

$$T_{startOffsetx} = T_{actMldx} - T_{(actMldx)\ n-1}$$

$$T_{endOffset} = T_{Prozessx} - T_{(Prozessx)\ n-1}$$

dans lequel
(n-1) est la température correspondante de la passe précédente.

19. Procédé selon la revendication 18, **caractérisé en ce que** qu'un temps ($t_{startOffset}$) et ($t_{endOffset}$) correspondant à l'écart de température de départ ($T_{startOffset}$) et/ou à l'écart de température de fin ($T_{endOffset}$), est calculé en fonction du chauffage pulsé ($K/s_{heat}$) ou du refroidissement pulsé ($K/s_{cool}$), sachant que :

    pour le chauffage pulsé :

$$t_{startOffset} = T_{startOffset} / K/s_{heat}$$

$$t_{endOffset} = T_{endOffset} / K/s_{heat}$$

    pour le refroidissement pulsé :

$$t_{startOffset} = T_{startOffset} / K/s_{cool}$$

$$t_{endOffset} = T_{endOffset} / K/s_{cool}$$

20. Procédé selon la revendication 19, **caractérisé en ce qu'**un temps de commande ($t_{Prozess(x)}$) pour un procédé de chauffage et/ou un procédé de refroidissement est déterminé à partir du temps de commande ($t_{Prozess(x-1)}$) venant du procédé précédent plus le temps ($t_{startOffset}$) à partir du procédé actuel plus le temps ($t_{endOffset}$) venant du procédé précédent, ce qui peut être représenté sous forme de formule par :

$$t_{Prozess(x)} = t_{Prozess(x-1)} + t_{startOffsetx} + t_{endOffset(x-1)}.$$

$$t_{endOffset} = T_{endOffset} / K/s_{cool}$$

Fig. 1

EP 3 661 720 B2

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007019389 B4
- EP 2329332 B1
- DE 102006031268 A1
- DE 102004052499 A1
- DE 102008045006 A1

**In der Beschreibung aufgeführte Nicht-Patentliteratur**

- Heiß macht schön - Hochwertige Oberflächen durch variotherme Werkzeugtemperierung. *Plastverarbeiter*, July 2008, 36-38
- Variotherme Temperierung - Methoden und Einsatzmöglichkeiten. **VON J. GIEßAUF**. Spritzgießen 2008 - Innovation und Produktivität. ENGEL Austria GmbH, 29 January 2008